# EUROPÄISCHE PATENTSCHRIFT

(11) **EP 3 368 954 B1**
(45) Veröffentlichungstag und Bekanntmachung des Hinweises auf die Patenterteilung: **04.08.2021**
(21) Anmeldenummer: 16788112.7
(22) Anmeldetag: 28.10.2016
(51) Int. Cl.: G05B 19/409, G05B 19/427, G05B 19/423, B25J 9/16

(54) **VERFAHREN, STEUERUNGSSYSTEM UND BEWEGUNGSVORGABEMITTEL ZUM STEUERN DER BEWEGUNGEN VON GELENKARMEN EINES INDUSTRIEROBOTERS**
METHOD, CONTROL SYSTEM, AND MOVEMENT SETTING MEANS FOR CONTROLLING THE MOVEMENTS OF ARTICULATED ARMS OF AN INDUSTRIAL ROBOT
PROCÉDÉ, SYSTÈME DE COMMANDE ET MOYEN DE SPÉCIFICATION DE MOUVEMENT POUR LA COMMANDE DES MOUVEMENTS DE BRAS ARTICULÉS D'UN ROBOT INDUSTRIEL

(30) Priorität: 30.10.2015 DE 102015221337
(43) Veröffentlichungstag der Anmeldung: 05.09.2018
(73) Patentinhaber: KEBA AG, 4041 Linz (AT)
(72) Erfinder: PREISINGER, Gernot, 4030 Linz (AT); SCHININGER, Manfred, 4030 Linz (AT)
(74) Vertreter: Burger, Hannes
(86) Internationale Anmeldenummer: PCT/EP2016/076042
(87) Internationale Veröffentlichungsnummer: WO 2017/072281

(56) Entgegenhaltungen:
- EP-A1- 1 588 806
- EP-A1- 2 055 446
- EP-A1- 2 481 529
- EP-A1- 2 483 039
- EP-A2- 2 012 208
- WO-A1-2011/153569
- WO-A1-2013/033747
- DE-A1-102007 014 497
- DE-A1-102014 200 066
- KR-A- 20130 000 496

## Beschreibung

Die Erfindung betrifft ein Verfahren zum Steuern der Bewegungen von Gelenkarmen eines Industrieroboters, ein Steuerungssystem zur Umsetzung des entsprechenden Steuerungsverfahrens, sowie ein in einem solchen Steuerungssystem einsetzbares Bewegungsvorgabemittel, wie dies in den Ansprüchen 1, 24 und 25 angegeben ist.

Ein verbreiteter Stand der Technik beim Teachen der Positionen von Robotern, insbesondere von Industrierobotern, sind Handbediengeräte mit Tasten oder einem Joystick, mit welchen der Roboter selbst, oder einzelne Achsen seiner Gelenksarme, verfahren werden können. Dabei können einzelne Punkte auf der entsprechenden Bewegungsbahn abgespeichert werden, um in einem nachfolgenden Automatikbetrieb die jeweilige Bewegungsbahn oftmals wiederholen zu können.

Eine weitere Möglichkeit zum Einlernen bzw. Programmieren von Roboterbewegungen ist eine unmittelbare Handführung des Roboters. Entsprechend einer ersten Ausführungsform wird dabei der Endeffektor des Roboters einfach mit der Hand ergriffen und an die gewünschte Position bewegt. Entsprechend einer zweiten Ausführungsform ist vorgesehen, dass Griffe direkt an den Roboter mechanisch angekoppelt werden und zum Beispiel über eine hochgenaue Kraft- bzw. Momentenmessung die Betätigungskraft des Bedieners ausgewertet und zur Steuerung bzw. Regelung der Position des Roboters verwendet wird. Diese Ausführungen haben den sicherheitstechnischen Nachteil, dass der Benutzer sehr nahe am Roboter stehen muss, oder sich teilweise sogar unterhalb der Bewegungsarme des Roboters befindet. Bei einem Fahrfehler des Roboters bzw. bei einem Berechnungsfehler oder einem sonstigen Fehler seiner Steuervorrichtung kann der Roboter noch einen relativ großen Weg mit durchaus hoher Geschwindigkeit zurücklegen, bis ihn eine Sicherheitsüberwachung normalerweise zum Stillstand bringt. Dies kann aber ausreichend sein, um eine sich nahe befindliche Person zu verletzen. Zudem muss bei der zweitgenannten Ausführungsform die Schwierigkeit der ausreichend stabilen mechanischen Ankopplung an den Roboter überwunden werden, was Eingriffe in die Mechanik bzw. Tragstruktur des Roboters erfordert. Ein häufiges und rasches Umkoppeln des Angriffspunktes am Roboter ist damit ebenfalls kaum möglich bzw. wenig benutzerfreundlich.

Die EP2055446A1 beschreibt ein Handbediengerät mit integrierten Inertialsensoren, mit welchen Linear- und Rotationsbeschleunigungen des Handbediengerätes erfasst werden, daraus lineare und rotatorische Relativbewegungen berechnet werden können und solche Bewegungsänderungen des Handbediengerätes während dem Drücken einer Freigabetaste entweder 1:1, oder auch skaliert, sowie in Echtzeit, d.h. im Wesentlichen unverzögert, in eine entsprechende Roboterbewegung umgesetzt werden. Gemäß den Ausführungen in dieser Druckschrift wird durch die Bewegungen des Handbediengerätes immer auf die Bewegungen des Endeffektors bzw. des Greifers oder des Werkzeuges des Roboters Einfluss genommen.

Eine weitere bekannte Druckschrift ist die DE102012010721A1. Die darin offenbarte Ausführung ist nicht nur auf die Anwendung bei Robotern beschränkt, sondern allgemein für das Bewegen von Maschinen oder Maschinenteilen, wie zum Beispiel einer Druckmaschine bzw. einer Druckwalze, vorgesehen. Als Handbediengerät wird eine drahtlos angebundene Vorrichtung in Art eines Tablets oder Smartphones vorgeschlagen. Eine virtuelle Bewegungskopplung zwischen dem Handbediengerät und der Maschine kann für einen oder mehrere Freiheitsgrade erfolgen. Wie ein solches Konzept möglichst praktikabel umzusetzen ist, ist dieser Druckschrift nicht zu entnehmen.

Die US6385508B1 beschreibt einen elektromechanisch ausgeführten Führungsgriff zur Führung eines Roboters. Dabei ist insbesondere ein Zweihandgriff vorgesehen, über welchen eine mechanisch feste Verbindung mit dem Roboter aufgebaut wird und über welchen Zweihandgriff der Roboter bzw. dessen Endeffektor von einer Bedienperson in eine gewünschte Position und Orientierung verbringbar ist. Die mechanische Verbindung zwischen diesem beidhändig zu bedienenden Griff und dem Roboter umfasst einerseits eine feste Verbindungsstelle zum Roboter und zudem eine gelenkige Verbindungsstelle zwischen dieser festen Verbindungsstelle und dem Zweihandgriff für die Bedienperson. Damit können Relativveränderungen der Orientierung und Position des Zweihandgriffes während dem Teachen des Roboters ausgeglichen werden. Die gelenkige Verbindungsstelle ist derart ausgestaltet, dass nur Kräfte entsprechend dreier Freiheitsgrade übertragen werden können, insbesondere nur Kräfte in x-/y-/z-Richtung und keine Drehmomente. Daher wird als Vorteil eine einfachere Sensorik gegenüber einer 6D-Kraft- bzw. Momentensensorik angeführt, und dass durch Umschalten der Robotersteuerung bzw. des Bewegungsmodus entweder die Position des TCP bei gleich bleibender Werkzeugorientierung, oder im anderen Fall nur die Werkzeugorientierung bei gleich bleibender Position, verändert werden kann. Die Befestigung des Führungsgriffes kann an verschiedenen Positionen am Roboter erfolgen und kann die jeweilige Befestigungsposition im Zuge des Teach-Vorganges verändert werden. Hierfür wird insbesondere eine magnetische Befestigung des Führungsgriffes gegenüber dem Roboter gelehrt.

Ein Steuerungsverfahren, ein Steuerungssystem und ein Bewegungsvorgabemittel entsprechend dem einleitenden Teil der unabhängigen Ansprüche ist in der EP1588806A1 beschrieben.

Weitere Ausführungsformen zur möglichst einfachen Handsteuerung bzw. zur möglichst intuitiven, handgeführten Programmierung von Industrierobotern sind aus der WO2011/150440A2, der WO2011/153569A1, der WO2011/153570A1, und der WO2013/033747A1, welche Druckschriften allesamt auf die Anmelderin des vorliegenden Schutzrechtes zurückgehen, bekannt.

Aufgabe der vorliegenden Erfindung war es, die Nachteile des Standes der Technik zu überwinden und ein Verfahren bzw. eine Vorrichtung zur Verfügung zu stellen, mit welchen ein Benutzer in der Lage ist, eine einfache und intuitive Programmierung oder Ausführung von Stellbewegungen einer Maschine, insbesondere eines Industrieroboters, vornehmen zu können.

Diese Aufgabe wird durch ein Steuerungsverfahren, durch ein Steuerungssystem und ein Bewegungsvorgabemittel gemäß den Ansprüchen gelöst.

Bei dem erfindungsgemäßen Verfahren bzw. System zum Steuern der Bewegungen der Gelenkarme eines Industrieroboters bzw. zum Steuern der Bewegungen von verstellbaren Maschinenteilen einer sonstigen, mehrachsigen Maschine, ist ein durch eine Bedienperson händisch zu führendes Bewegungsvorgabemittel vorgesehen, dessen Bewegungen zur Generierung von wenigstens einem Teil der Bewegungssteuerdaten für die zu steuernde Maschine bzw. den zu steuernden Industrieroboter vorgesehen sind. Unter einer händischen Führung des Bewegungsvorgabemittels ist dabei sowohl eine freie Führung im Raum, als auch eine Relativverstellung bzw. Auslenkung eines Teilabschnittes des Bewegungsvorgabemittels relativ zu einem fest bzw. lösbar montierten Teilabschnitt des Bewegungsvorgabemittels zu verstehen. Das Bewegungsvorgabemittel ist dabei mit wenigstens einer stationären Steuervorrichtung datentechnisch gekoppelt und die wenigstens eine Steuervorrichtung ist zumindest zur Aktivierung und Deaktivierung von Bewegungsantrieben der Maschine bzw. des Industrieroboters ausgebildet. Zumindest an einzelnen von der Bedienperson gesteuert verstellbaren Maschinenteilen bzw. Gelenkarmen ist dabei wenigstens eine von mehreren Referenzmarken angeordnet oder ausgebildet. Das Bewegungsvorgabemittel weist zumindest einen bildgebenden und/oder zumindest einen abstandssensitiven Sensor auf, welcher zumindest eine Sensor mit wenigstens einer der mehreren Referenzmarken in eine von der Bedienperson ausgewählte räumliche Relativposition versetzbar ist. In einem ersten bzw. initialen Schritt wird dabei unter Verwendung bildbasierender und/oder abstandsbasierender Daten aus der relativen Lage zwischen dem Bewegungsvorgabemittel und der jeweiligen Referenzmarke eine starre Koppelbedingung, oder eine um bestimmte Freiheitsgrade gelenkig gedachte Koppelbedingung definiert bzw. festgelegt. In einem nachfolgenden Schritt wird während einer Bewegung des Bewegungsvorgabemittels das die selektierte Referenzmarke tragende Maschinenteil, insbesondere der jeweilige Gelenkarm bzw. die jeweils erforderlichen Gelenkarme des Industrieroboters, steuerungstechnisch derart nachgeführt, dass im Rahmen der technischen Grenzen der Maschine oder des Maschinenteils, insbesondere im Rahmen der technischen Grenzen des angebundenen Industrieroboters, die im ersten Schritt festgelegte Koppelbedingung eingehalten oder zumindest annähernd eingehalten wird.

Erfindungsgemäß ist somit eine Art virtuell bzw. semimechanisch ankoppelbares Greif- bzw. Bewegungsvorgabemittel zur Handführung von Industrierobotern geschaffen. Das Greifmittel bzw. das dementsprechende Bewegungsvorgabemittel kann dabei eine Greif- bzw. Aktivierungstaste aufweisen, sowie eventuell einen kurzen Stab zur Distanzverlängerung umfassen. Indem man das Ende des Stabes bzw. Bewegungsvorgabemittel an dafür vorgesehene Stellen des Industrieroboters oder auch des Werkstücks hält oder daran abstützt, wobei dies innerhalb einer bestimmten Toleranz zu erfolgen hat, und zudem die Greiftaste betätigt wird, kann man den Roboter bzw. einzelne seiner Gelenkarme virtuell an das Bewegungsvorgabemittel koppeln. Mit jeder weiteren durchgeführten Bewegung kann dann der entsprechende Angriffspunkt des Roboters bzw. der Industrieroboter per se automatisch den Bewegungen des Bewegungsvorgabemittels folgen, als ob man eine feste mechanische Kopplung gegenüber dem Industrieroboter hergestellt hätte. Der Industrieroboter versucht dabei, mit Hilfe seiner Steuerungsvorrichtung den Abstand bzw. die Orientierung zwischen dem Angriffs- bzw. dem Kontaktpunkt und dem Bewegungsvorgabemittel, beispielsweise gegenüber dessen End- oder Erfassungspunkt, konstant zu halten bzw. bestmöglich nachzuführen. Diese Nachführung kann dabei entsprechend einer zweckmäßigen Ausführungsform so lange erfolgen, solange die Greif- bzw. Aktivierungstaste durch die Bedienperson betätigt wird.

Die erfindungsgemäßen Maßnahmen begünstigen eine einfache und intuitive Programmierung oder Ausführung von Bewegungen einer Maschine, insbesondere eines Industrieroboters. Insbesondere kann dadurch das Denken in Koordinatensystemen bzw. Raumrichtungen und die Berücksichtigung der Blickrichtung der Bedienperson auf den Industrieroboter, insbesondere in Bezug auf Ansichten von vorne, hinten oder seitlich, entfallen. Ein besonderer Vorteil liegt auch darin, dass durch die sehr einfache und intuitive Selektionsmöglichkeit von einzelnen, jeweils bewegbaren Maschinenteilen bzw. Gelenkarmen eine rasche Einarbeitung in die Steuerungssystematik ermöglicht ist. Auch Fehlbedienungen hinsichtlich der gewollten Bewegungsrichtung bzw. irrtümliche Aktivierungen von Bewegungen eines nicht benötigten bzw. nicht gewünschten Gelenkarms des Industrieroboters können dadurch hintan gehalten werden. Zudem kann die Anzahl der Bedientasten bzw. die Anzahl von mehrachsigen Bedienelementen, wie z.B. Joysticks, für die Einleitung der jeweiligen Bewegungskommandos reduziert werden, was die Übersichtlichkeit und Baugröße der entsprechenden Steuerungssysteme begünstigt.

Zweckmäßig sind auch die Maßnahmen gemäß Anspruch 2, da dadurch die Erfassung der jeweiligen räumlichen Position und/oder Orientierung bzw. der sogenannten Pose des Bewegungsvorgabemittels im Raum je nach Umgebungsbedingungen bzw. je nach geforderter Erfassungsdynamik besonders präzise und zuverlässig vorgenommen werden kann. Dabei ist beispielsweise durch eine Kombination von interner Sensorik und von externer Sensorik in Bezug auf das Bewegungsvorgabemittel eine hochgenaue und von Drifteinflüssen weitgehend befreite Posenermittlung erzielbar. Durch Verwendung der Daten des bildgebenden und/oder abstandssensitiven Sensors am Bewegungsvorgabemittel kann in einfacher und zuverlässiger Art und Weise eine bedienerseitige Veränderung der Pose des Bewegungsvorgabemittels bzw. von dessen Griffabschnitt relativ zur bekannten Position der jeweils selektierten bzw. zugeordneten Referenzmarke ausreichend exakt und zuverlässig festgestellt werden. Auch das Ausmaß solcher Auslenkungen in Form von translatorischen und/oder rotatorischen Verstellbewegungen des Bewegungsvorgabemittels relativ zur jeweils selektierten Referenzmarke kann durch abstandssensitive bzw. bildgebende Sensoren optimal detektiert werden.

Vorteilhaft sind auch die Maßnahmen gemäß Anspruch 3, da dadurch eine für die Bedienperson klar nachvollziehbare Bewegungskopplung zwischen dem Bewegungsvorgabemittel und der zu steuernden Maschine bzw. dem virtuell jeweils angekoppelten Maschinenteil vorliegt. Insbesondere kann dadurch ein eindeutiger visueller Vergleich zwischen Bewegungsvorgabe und Bewegungsausführung durch die entsprechend gesteuerte Maschine vorgenommen werden. Derartige starre Koppelbedingungen unterliegen dabei natürlich gewissen Grenzen, unter anderem hinsichtlich der jeweiligen Kinematik und Bewegungsdynamik der angesteuerten Maschine bzw. des angesteuerten Industrieroboters.

Zweckmäßig ist auch eine Ausführung gemäß Anspruch 4, da dadurch eine in Bezug auf die erzielbare ergonomische Führung des Bewegungsvorgabemittels verbesserte Ausführung geschaffen ist. Beispielsweise bei relativ weitreichenden linearen Verstellbewegungen eines Maschinenteils bzw. des Endeffektors eines Industrieroboters kann die Bedienperson dennoch an einem Standort verbleiben, während der Endeffektor relativ weitreichende Verstellbewegungen ausführt.

Durch die Maßnahmen gemäß Anspruch 5 kann ein vielfältiges Eingriffs- bzw. Steuerungsverhalten selektiv voreingestellt werden und kann darüber hinaus die Diskrepanz zwischen den Vorgaben der Bedienperson und der letztendlichen Bewegungsausführung von Seiten der Steuervorrichtung bzw. des Industrieroboters möglichst gering gehalten werden.

Von Vorteil sind auch die Maßnahmen nach Anspruch 6, da dadurch ein Industrieroboter beispielsweise derart geführt werden kann, dass dessen Endeffektor bzw. der jeweils ausgewählte Gelenkarm entweder nur translatorische Bewegungen ausführt, oder nur rotatorische Bewegungen, beispielsweise um den TCP. Oder der Endeffektor bleibt überhaupt stehen, während nur die Lage eines Ellenbogengelenks des Industrieroboters verändert wird. Dadurch kann die Führung des Bewegungsvorgabemittels für die Bedienperson erheblich erleichtert werden, nachdem eine absolut exakte Führung des Bewegungsvorgabemittels nicht notwendig ist. Die Auftrennung in Wirkrichtungen bzw. die Filterung in Bezug auf translatorische oder rotatorische Bewegungen können auch ungewollte Verstellbewegungen des Industrieroboters vermieden werden.

Durch die Maßnahmen gemäß Anspruch 7 kann in einfacher und effektiver Art und Weise die Sicherheit des Steuerungssystems gesteigert werden. Insbesondere können dadurch unbeabsichtigte Auslösungen von Verfahrbewegungen des Industrieroboters hintan gehalten werden.

Von Vorteil sind auch die Maßnahmen nach Anspruch 8, da dadurch eine einfache und überaus intuitive Art und Weise zur Auswahl einer für eine Bewegung bzw. Positionsveränderung vorgesehenen Maschinenteils bzw. Gelenkarms bewerkstelligt bzw. angeboten ist. Zusätzlich zur einfachen Selektion des für eine Verstellung bzw. Positionsveränderung vorgesehenen Maschinenteils kann quasi der virtuelle Angriffspunkt des Bewegungsvorgabemittels aufgebaut werden, um eine intuitive Verstellbewegung des zuvor ausgewählten Maschinenteils bzw. Gelenkarms letztendlich auch aus- bzw. durchführen zu können. Darüber hinaus sind die jeweiligen Maßnahmen hinsichtlich der erforderlichen Komponenten relativ einfach bzw. kostengünstig implementierbar. Der entsprechende Auswahlvorgang kann dabei eine vorausgehende oder abschließende Bedienhandlung in Art eines Tastendrucks am Bewegungsvorgabemittel umfassen. Dies ist aber nicht zwingend erforderlich, denn grundsätzlich genügt die bloße Erfassung einer selektierten Referenzmarke am jeweils gewünschten, zur Bewegung vorgesehenen Maschinenteil bzw. Gelenkarm.

Zweckmäßig sind auch die Maßnahmen gemäß Anspruch 9, da dadurch die jeweilige Referenzmarke als Datenträger und/oder als Verlinkungsmittel zu einem Datensatz fungiert, um so die jeweiligen Steuerungsabläufe vereinfacht bzw. hinsichtlich der Nutzungsabläufe optimiert ausführen zu können.

Durch die Maßnahmen gemäß Anspruch 10 können einerseits die Bedienergonomie gesteigert und andererseits auch Irrtümer bzw. fehlerhafte Annahmen seitens der Bedienperson zuverlässig hintan gehalten werden.

Von Vorteil sind auch die Maßnahmen gemäß Anspruch 11, da dadurch Informationen bzw. Daten zur Verfügung stehen, welche der Bedienperson die Evaluierung der Steuerungsabläufe bzw. der jeweils aktuellen Zustände deutlich erleichtern.

Zweckmäßig sind auch die Maßnahmen gemäß Anspruch 12, da dadurch der Aufbau einer Koppelbedingung bewusst bzw. benutzerinitiiert zu erfolgen hat und somit Irrtümer bzw. Fehlbedienungen ausgeschlossen werden können.

Zweckmäßig sind auch die Maßnahmen gemäß Anspruch 13, da dadurch unpraktikable bzw. hinsichtlich der virtuellen Kopplungen ungünstige Relativpositionen ausgefiltert bzw. unterdrückt werden können. Somit wird erreicht, dass die jeweils erzielbare Steuerungsgenauigkeit bzw. Bedienungsergonomie möglichst hoch gehalten wird. Auch der Einnahme von aus Sicherheitsüberlegungen nachteiligen Positionen der Bedienperson kann auf diese Weise entgegengewirkt werden.

Auch durch die Maßnahmen gemäß Anspruch 14 kann unterstützend dazu beigetragen werden, dass möglichst ideale Koppelbedingungen bzw. virtuelle Koppelungsverhältnisse aufgebaut werden und ungünstige bzw. kritische Koppelbedingungen verwehrt oder zumindest angezeigt werden können.

Bei der Verwendung einer Kameraeinheit als bildgebender Sensor, wie dies in Anspruch 15 angegeben ist, wird in vorteilhafter Art und Weise erreicht, dass damit in relativ kurzer Zeit eine hohe Menge an Informationen aufgenommen bzw. erfasst werden kann und durch entsprechende Objekterkennungen bzw. durch standardmäßige Auswertungsalgorithmen eine zuverlässige Informations- bzw. Datenerfassung ermöglicht ist. Insbesondere können dadurch Winkelverstellungen und auch translatorische Relativverstellungen gegenüber einer anvisierten bzw. erfassten Referenzmarke gut erkannt und relativ hochauflösend bewertet werden.

Abstandsbasierende bzw. distanzbasierende und hinsichtlich des Erfassungsbereiches beschränkte Sensoren, wie sie in Anspruch 16 angegeben sind, haben den Vorteil, dass all jene Distanzen automatisch ausgeblendet werden können, welche außerhalb eines definierten Distanzbereiches bzw. über einem definierten Distanzgrenzwert liegen. Darüber hinaus sind derartige abstandssensitive Sensoren kostengünstig und relativ einfach implementierbar.

Einfach und kostengünstig produzierbare Referenzmarken sind in Anspruch 17 angegeben. Insbesondere ist es in einfacher Art und Weise möglich, derartige Referenzmarken an den jeweiligen zur Bewegung bzw. Relativverstellung vorgesehenen Maschinenteilen bzw. Gelenkarmen eines Industrieroboters anzubringen, beispielsweise anzukleben, oder anderweitig zu befestigen.

Zweckmäßig sind auch Maßnahmen gemäß Anspruch 18, da dadurch dreidimensionale Objekte geschaffen sind, mit welchen die jeweilige Bewegungssteuerung, insbesondere die Erfassung der jeweiligen räumlichen Relativlage vereinfacht bzw. begünstigt werden kann.

Zweckmäßig ist auch die Maßnahme nach Anspruch 19, da dadurch ein anvisieren bzw. selektieren einer Referenzmarke aus einer Mehrzahl von grundsätzlich verfügbaren Referenzmarken erleichtert bzw. möglichst intuitiv gestaltet werden kann. Insbesondere kann dadurch in Art einer Zeigeoperation die steuerungstechnische Auswahl einer jeweils gewünschten Referenzmarke bzw. des damit verbundenen Maschinenteils relativ einfach und rasch, sowie mit hoher Fehlersicherheit vorgenommen werden. Außerdem kann dadurch der Bedienperson eine Einhand-Bedienung ermöglicht werden.

Von besonderem Vorteil sind auch die Maßnahmen gemäß Anspruch 20, da dadurch die erzielbare Personensicherheit deutlich gesteigert werden kann. Insbesondere wird durch die distanzbehaftete, virtuelle Ankopplung des beweglichen Maschinenteils eine ausreichende Distanz zwischen der Bedienperson und dem entsprechend bewegten Maschinenteil ermöglicht. Dadurch können Verletzungen aufgrund von Unachtsamkeiten der Bedienperson oder auch aufgrund allfälliger Fehlfunktion bzw. Fehlberechnungen seitens der Steuervorrichtungen hintan gehalten werden.

Durch die Maßnahmen gemäß Anspruch 21 können diverse Systemverhalten in einfacher Art und Weise modelliert werden und kann so die Interaktion zwischen einem Benutzer und dem jeweiligen Maschinenteil verbessert bzw. begünstigt werden. Insbesondere kann dadurch trotz virtueller Kopplung bzw. Verbindung zwischen dem Bewegungsvorgabemittel und dem entsprechend bewegten Maschinenteil eine möglichst natürlich empfundene Bewegungsumsetzung bzw. Bewegungsführung unterstützt bzw. begünstigt werden. Insbesondere können durch eine derartige Modellierung eventuelle Zitterbewegungen oder ruckartige Bewegungen des Bewegungsvorgabemittels hinsichtlich ihrer Auswirkung auf die Roboterbewegung gedämpft werden, sodass eine entsprechend feinfühlige und genaue Positionierung ermöglicht wird.

Von Vorteil ist auch eine Ausführung gemäß Anspruch 22, da dadurch die Exaktheit der bedienerseitigen Maschinen- bzw. Roboterführung begünstigt werden kann. Beispielsweise können dadurch Zitterbewegungen der Bedienperson aufgrund des gegenüber der Maschine bzw. dem Industrieroboter abgestützten Bewegungsvorgabemittels hintan gehalten werden. Diese effektive Unterdrückung von Zitterbewegungen wird auch bei langsamen Bewegungen des Bewegungsvorgabemittels erzielt, nachdem das Bewegungsvorgabemittel zumindest zeitweise bzw. zumindest teilweise am entsprechend bewegten Maschinenteil abgestützt wird bzw. abgestützt werden kann. Zudem wird durch das haptische Feedback ausgehend vom Maschinenteil über das Bewegungsvorgabemittel in Richtung zur Bedienperson eine möglichst harmonische bzw. intuitiv begünstigte Bewegungsführung ermöglicht. Insbesondere kann durch den direkten Bewegungskontakt zwischen dem Bewegungsvorgabemittel bzw. der Bedienperson und dem Industrieroboter relativ rasch auf unerwünschte Bewegungen reagiert werden, bzw. kann so eine Art Regelkreis zwischen dem Industrieroboter bzw. dessen Steuervorrichtung und der Bedienperson aufgebaut werden.

Von besonderem Vorteil sind auch die Maßnahmen gemäß Anspruch 23, da dadurch ein haptisches Feedback gegenüber der Bedienperson erzielt wird, während sich die der entsprechende Gelenkarm entsprechend den Bewegungsvorgaben des Bewegungsvorgabemittels bewegt bzw. während sich mehrere Gelenkarme des Industrieroboters entsprechend den Bewegungsvorgaben des Bewegungsvorgabemittels bewegen. Dabei kann durch Auslesen bzw. Erfassen einer Referenzmarke, welche am entsprechenden Maschinenteil bzw. Gelenkarm angebracht ist, in intuitiver und relativ fehlersicherer Art und Weise die entsprechende virtuelle Ankopplung zwischen dem Bewegungsvorgabemittel und dem Industrieroboter bzw. dem gewünschten Gelenkarm aufgebaut werden. Zudem können dabei die von der Bedienperson initiierten Relativverstellungen des Bewegungsvorgabemittels gegenüber der ausgewählten Referenzmarke klar und unmissverständlich in entsprechende Steuer- bzw. Bewegungskommandos für den Industrieroboter bzw. den jeweiligen Gelenkarm umgewandelt werden.

Die Erfindung betrifft weiters ein Steuerungssystem und ein Bewegungsvorgabemittel, wie dies in den Ansprüchen 24 und 25 angegeben ist. Die entsprechenden Ausführungen lösen die einleitend genannte Aufgabe ebenso. Die mit diesen erfindungsgemäßen Lösungen erzielbaren technischen Vorteile und vorteilhaften Wirkungen sind den vorhergehenden und nachstehenden Beschreibungsteilen zu entnehmen.

Zum besseren Verständnis der Erfindung wird diese anhand der nachfolgenden, in den Figuren dargestellten Ausführungsbeispiele näher erläutert.

Es zeigen jeweils in stark vereinfachter, schematischer Darstellung:
- Fig. 1: ein Ausführungsbeispiel eines Steuerungssystems für einen Industrieroboter, in welchem ein händisch zu führendes Bewegungsvorgabemittel zur Generierung von Steuerungsanweisungen für den Industrieroboter eingesetzt wird;
- Fig. 2: ein Schemabild zur Veranschaulichung eines weiteren Ausführungsbeispiels einer virtuellen Kopplung zwischen einem händisch zu führenden Bewegungsvorgabemittel und einem mehrachsigen Industrieroboter mit mehreren, unabhängig voneinander verstell- bzw. bewegbaren Gelenkarmen;
- Fig. 3: eine weitere Ausführungsform eines durch eine Bedienperson händisch zu führenden Bewegungsvorgabemittels zur selektiven, steuerungstechnischen Ankopplung von Gelenkarmen eines Industrieroboters, welches Bewegungsvorgabemittel zur lastübertragenden Abstützung bzw. zur mechanischen Kontaktierung gegenüber den gesteuert bewegbaren Gelenkarmen des Industrieroboters vorgesehen ist;
- Fig. 4: eine zusätzliche Ausführungsform eines händisch zu führenden Bewegungsvorgabemittels zur selektiven, steuerungstechnischen Ankopplung von Gelenkarmen eines Industrieroboters, welches Bewegungsvorgabemittel zur lastübertragenden Abstützung bzw. zur mechanischen Kontaktierung gegenüber den gesteuert bewegbaren Gelenkarmen des Industrieroboters vorgesehen ist;
- Fig. 5: eine Schnittdarstellung des Bewegungsvorgabemittels nach Fig. 4, geschnitten gemäß den Linien V-V in Fig. 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten des beanspruchten Verfahrens bzw. Systems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzbegehren mit umfasst.

Zudem wird darauf hingewiesen dass der Begriff "Maschine" als Synonym oder Überbegriff für einen Industrieroboter zu verstehen ist und der Ausdruck "Maschinenteil" vor allem einen Gelenkarm eines solchen Industrieroboters darstellen kann. Ein solcher Gelenkarm eines mehrachsigen Industrie- bzw. Gelenkroboters - fallweise auch Knickarm-Roboter bezeichnet - weist dabei zumindest ein Gelenk auf, über welches der jeweilige Gelenkarm rotatorisch bzw. drehbeweglich gelagert ist. Die entsprechenden mechanischen Gelenke definieren somit rotatorische Bewegungsachsen bzw. Drehachsen, welchen jeweils Bewegungsantriebe zugeordnet sind. Der Ausdruck "Maschinenteil" umfasst darüber hinaus auch Werkstücke für jene Zeitspannen, in denen sie mit der Maschine eine reib- oder formschlüssige Verbindung eingehen, also beispielsweise von einem Robotergreifer gehalten werden, und quasi als Teil dieser Maschine steuerungstechnisch beeinflusst Bewegungen ausführen können.

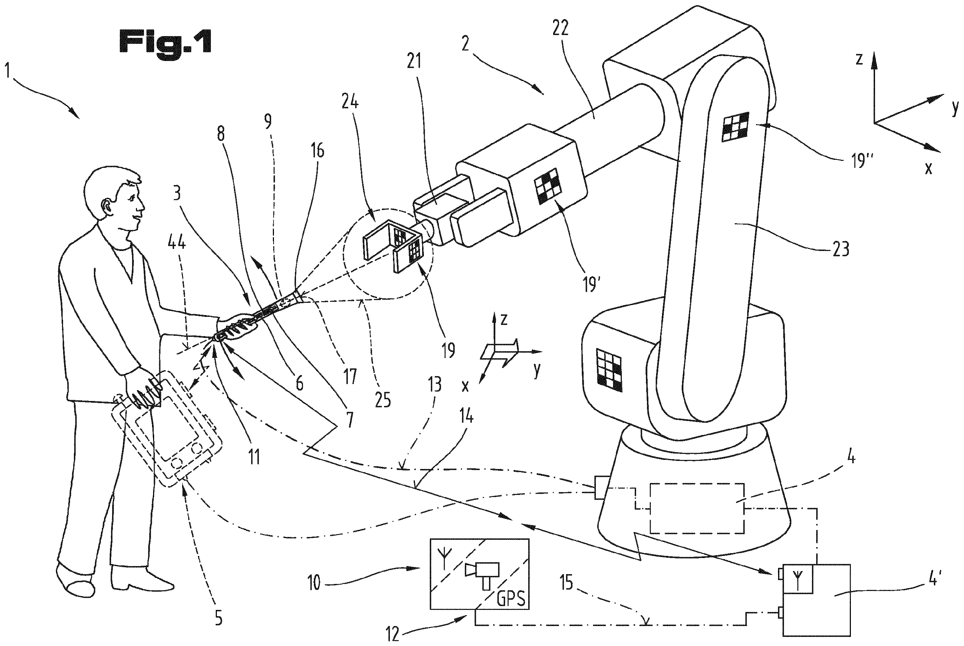

In Fig. 1 ist ein Ausführungsbeispiel eines Steuerungssystems 1 für einen Industrieroboter 2 schematisch und beispielhaft veranschaulicht. Mittels eines solchen Steuerungssystems 1, in welchem ein händisch zu führendes Bewegungsvorgabemittel 3 zur Generierung von Steuerungsanweisungen für den Industrieroboter 2 eingesetzt wird, ist eine Programmierung oder Vorgabe von Bewegungen oder Abläufen des Industrieroboters 2 ermöglicht. Dieser Industrieroboter 2 kann durch eine aus dem Stand der Technik bekannte, mehrachsige Manipulatoreinheit oder durch ein sonstiges Handling-Aggregat gebildet sein, mit welchem technische Prozesse, beispielsweise Schweiß- oder Lackierprozesse oder Handlingprozesse für Werkstücke, automatisiert oder teilautomatisiert ausgeführt werden können. Ein solcher Industrieroboter 2 stellt dabei eine bevorzugte Ausführungsform einer erfindungsgemäß zu steuernden Maschine dar.

Dem zumindest einen Industrieroboter 2 innerhalb des Steuerungssystems 1 ist zumindest eine integrierte und/oder externe Steuervorrichtung 4, 4' zugeordnet. Das Steuerungssystem 1 kann durch beliebige aus dem Stand der Technik bekannte, elektrotechnische Steuervorrichtungen 4, 4' gebildet werden, wobei je nach technologischem Bedarf zentrale und/oder dezentrale Steuerungsarchitekturen eingesetzt sein können. Insbesondere kann durch ein Zusammenwirken mehrerer integrierter und/oder externer Steuervorrichtungen 4, 4' ein verteiltes Steuerungssystem 1 aufgebaut werden, um die jeweiligen Steuerungsabläufe für einen mehrachsigen Industrieroboter 2 bewerkstelligen zu können.

Zusätzlich zu diesem händisch zu führenden Bewegungsvorgabemittel 3 kann ein in strichlierten Linien dargestelltes, mobiles Handterminal 5 vorgesehen sein. Ein solches mobiles Handterminal 5 weist eine hohe Funktionsdichte bzw. Funktionsvielfalt auf und stellt ein relativ hochentwickeltes, tragbares Bedien- und Beobachtungsgerät für die jeweiligen Steuerungsabläufe im Steuerungssystem 1 dar.

Das händisch zu führende Bewegungsvorgabemittel 3 kann zumindest eine Sicherheitsschalteinrichtung 6, insbesondere wenigstens einen Zustimmtaster oder ein dementsprechendes Eingabe- bzw. Betätigungsmittel aufweisen, welches zur bedienerseitigen Signalisierung einer Zustimmung zur Ausführung potentiell gefahrbringender Bewegungen oder Ablaufveränderungen vorgesehen ist.

Das händisch im Raum zu führende Bewegungsvorgabemittel 3 ist möglichst leicht und kompakt aufgebaut, bevorzugt stiftartig oder auch pistolenartig ausgeführt, um eine intuitive und möglichst bequeme Bewegungsvorgabe gegenüber dem Industrieroboter 2 zu erreichen. Zur Interaktion zwischen der Bedienperson und dem Steuerungssystem 1 kann das Bewegungsvorgabemittel 3 diverse Ein- und Ausgabeelemente, beispielsweise Tasten, Schalter, Leuchtdioden und/oder ein kleines Display 7 aufweisen. Insbesondere kann am händisch zu führenden Bewegungsvorgabemittel 3 wenigstens ein manuell zu betätigendes Bedienelement 8, beispielsweise in Form wenigstens eines Tastschalters, eines 4-Quadranten-Tasterelementes, eines Stellrades, einer Schaltwippe, eines miniaturisierten Joysticks oder dgl., ausgeführt sein. Mit diesem Bedienelement 8 ist es der Bedienperson ermöglicht, mit dem Steuerungssystem 1 zu interagieren bzw. Bewegungen oder Abläufe des Industrieroboters 2 bzw. einer sonstigen mehrachsig steuerbaren Maschine zu beeinflussen. Bei der Ausführungsform gemäß Fig. 1 ist das Bewegungsvorgabemittel 3 im Raum grundsätzlich frei bewegbar, insbesondere während der steuerungstechnischen Bewegungsvorgabe in der Hand der Bedienperson gehaltert und somit insgesamt ortsvariabel ausgeführt.

Wesentlich ist, dass mit dem von der Bedienperson händisch zu führenden Bewegungsvorgabemittel 3 zumindest ein Teil der Daten für die Bewegungsteuerung oder Ablaufprogrammierung des Industrieroboters 2 bzw. einer sonstigen Maschine generiert wird. Hierzu gibt die Bedienperson mittels dem Bewegungsvorgabemittel 3 quasi eine Sollbewegung und/oder eine Sollposition bzw. Sollorientierung vor, welche vom Steuerungssystem 1 derart umgesetzt wird, dass der zu steuernde bzw. zu bedienende Industrieroboter 2 vorgabegemäße Bewegungen oder Sollpositionen einnimmt bzw. vorgabegemäße Veränderungen im jeweiligen technischen Ablauf bzw. Prozessablauf umgesetzt werden. Das händisch zu führende Bewegungsvorgabemittel 3 kann eine integrierte Sensorik 9 aufweisen und/oder es kann dem händisch zu führenden Bewegungsvorgabemittel 3 eine externe Sensorik 10 zugeordnet sein, über welche die Orientierung und/oder die Position des händisch geführten Bewegungsvorgabemittels 3 im Raum ermittelt bzw. ausgewertet wird. Die Informationen bzw. Daten der integrierten und/oder externen Sensorik 9, 10 stellen sodann zumindest einen Teil jener Daten bzw. Steuerbefehle dar, welche für die Bewegungssteuerung oder Ablaufprogrammierung des Industrieroboters 2 verwendet bzw. benötigt werden.

Das Bewegungsvorgabemittel 3 kann entsprechend einer möglichen Ausführungsform ausschließlich eine integrierte Sensorik 9 umfassen und somit quasi als aktives Bewegungsvorgabemittel 3 fungieren. Alternativ dazu kann das Bewegungsvorgabemittel 3 auch passiv ausgeführt sein, wobei über eine externe Sensorik 10 die entsprechenden Orientierungs- und/oder Positionsdaten ermittelt werden bzw. deren zeitliche Veränderung aufgezeichnet wird. Selbstverständlich ist auch eine Kombination aus integrierter und externer Sensorik 9, 10 möglich, um beispielsweise eine besonders zuverlässige bzw. hochgenaue Ermittlung von Orientierungs- bzw. Positionsdaten des Bewegungsvorgabemittels 3 in Bezug auf den dreidimensionalen Raum zu erzielen. Unter dem Begriff Sensorik 9, 10 ist neben den eigentlichen sensorischen Erfassungsmitteln auch ein entsprechendes Auswertungsmittel, insbesondere eine elektronische Aufbereitungs- und Auswertungsvorrichtung zu verstehen, welche die sensorisch erfassten Signale bzw. Informationen in von den Steuerungskomponenten des Steuerungssystems 1 verwertbare bzw. weiterverarbeitbare Daten bzw. Schnittstellenprotokolle transferiert.

Die jeweilige Sensorik 9, 10 kann dabei durch beliebige aus dem Stand der Technik bekannte Erfassungs- und Auswertemittel gebildet sein, um die Orientierung und/oder die Position von Objekten im Raum daten- bzw. steuerungstechnisch ermitteln bzw. bestimmen zu können. Insbesondere können hierfür sogenannte Inertial-Sensoriken vorgesehen sein, welche vorzugsweise die im Bewegungsvorgabemittel 3 integrierte Sensorik 9 definieren. Mittels diesen Inertial-Sensoren, welche aus Intertial-Gebern, insbesondere aus Beschleunigungsaufnehmern und Drehwinkelgebern, sowie gegebenenfalls Magnetfeldsensoren bestehen können, kann eine rechnergestützte Ermittlung von Orientierungs- bzw. Positionsdaten und deren Veränderung vorgenommen werden.

Die Umsetzung der Ausführung nach Fig. 1 erfolgt zweckmäßerweise in Zusammenhang mit Inertialsensoren. Die Sensorik 9, 10 kann auch aus dem Stand der Technik bekannte Triangulationsverfahren für übertragene Signale mit spezifischer Laufzeit, optische Bilddatenerfassungen unter Zuhilfenahme von Videokameras, und sonstige Positionserfassungssysteme, wie zum Beispiel GPS oder lokale Positionserfassungssysteme umfassen. Wichtig ist, dass die jeweils ausgebildete Sensorik 9 und/oder 10 eine ausreichend genaue und zuverlässige Ermittlung der Orientierung und/oder Position des händisch zu führenden Bewegungsvorgabemittels 3 ermöglicht.

Gemäß einer vorteilhaften Ausführungsform kann vorgesehen sein, dass das Bewegungsvorgabemittel 3 quasi wie ein virtueller Handgriff für den Endeffektor des Industrieroboters 2 wirkt und die Positions- und Richtungsänderungen des Bewegungsvorgabemittels 3 in gleichartige Bewegungen des Industrieroboters 2 transformiert werden.

Zweckmäßig kann es sein, wenn die Steuerbefehle, die auf einer Vorgabe durch das händisch zu führende Bewegungsvorgabemittel 3 basieren, vom Industrieroboter 2 im wesentlichen unverzögert, insbesondere in Echtzeit, in korrespondierende Bewegungen oder Ablaufveränderungen umgesetzt werden. Eine der Voraussetzungen für die Umsetzung der bedienerseitigen Bewegungsvorgaben durch den Industrieroboter 2 besteht dabei darin, dass die von der Bedienperson vorgegebene Bewegung oder Ablaufveränderung unter Berücksichtigung von vordefinierten technischen Beschränkungen des Industrieroboters 2, wie beispielsweise einer aufbau- oder umgebungsbedingten Erreichbarkeit von Positionen oder Orientierungen, oder einer technisch erreichbaren, oder einer sicherheitstechnisch zulässigen, maximalen Geschwindigkeit von Achsen oder Stellelementen des Industrieroboters 2, technisch ausführbar ist. Neben der technischen Ausführbarkeit soll die ausgeführte Bewegung des Industrieroboters 2 aber auch dem tatsächlichen Willen der Bedienperson in allen Situationen weitestgehend entsprechen und ist es daher ein Aspekt der angegebenen Maßnahmen, dass identifizierbare Störeinflüsse oder Diskrepanzen automatisiert oder automationsunterstützt überprüft und gegebenenfalls kompensiert werden.

Die im händisch zu führenden Bewegungsvorgabemittel 3 integrierte Sensorik 9 bzw. das Bewegungsvorgabemittel 3 per se und/oder die externe Sensorik 10 weist entsprechend einer zweckmäßigen Ausgestaltung zumindest eine Datenschnittstelle 11, 12 auf, über welche zumindest Daten für die Bewegungssteuerung oder Ablaufprogrammierung über zumindest eine dazugehörige Datenverbindung 13, 14, 15 direkt oder indirekt an die Steuervorrichtung 4, 4' übermittelt werden, welche Steuervorrichtung 4, 4' zur Veränderung von Zuständen des Industrieroboters 2, wie dies in Fig. 1 schematisch veranschaulicht wurde, ausgebildet ist. Die Datenverbindung 13 kann dabei als direkte Verbindung zwischen der Sensorik 9 bzw. dem Bewegungsvorgabemittel 3 und der Steuervorrichtung 4 ausgebildet sein, oder - wie schematisch dargestellt - als indirekte Datenverbindung 14 über eine der Steuervorrichtung 4 vorgeschaltete Zwischen- oder Basisstation bzw. Steuervorrichtung 4' ausgeführt sein. Alternativ oder in Kombination dazu kann auch eine indirekte Datenverbindung 15 vorgesehen sein, welche ausgehend von der externen Sensorik 10 über eine oder mehrere elektronische Zwischen- oder Basisstationen bzw. Steuervorrichtungen 4' zur Steuervorrichtung 4 des Industrieroboters 2 verläuft.

Die Datenverbindungen 13, 14 bzw. 15 können dabei drahtgebunden oder kabellos, insbesondere auf Funkbasis ausgeführt sein. Wesentlich ist, dass die von der Sensorik 9 ermittelten Beschleunigungs- und/oder Drehwinkelwerte und/oder die von der Sensorik 10 ermittelten Orientierungs- bzw. Positionsdaten des Bewegungsvorgabemittels 3 via eine geeignete Datenverbindung 13, 14 bzw. 15 an die Steuervorrichtung 4, 4' übermittelt werden und von dieser zumindest teilweise verwertet bzw. weiterverarbeitet werden, bevor die entsprechenden Steuerkommandos bzw. Steuerbefehle des Bewegungsvorgabemittels 3 vom Industrieroboter 2 ausgeführt werden.

Entsprechend einer zweckmäßigen Maßnahme kann vorgesehen sein, dass vom händisch zu führenden Bewegungsvorgabemittel 3 ausgehende Steuerbefehle vom Industrieroboter 2 nur dann umgesetzt werden, wenn gleichzeitig die Sicherheitsschalteinrichtung 6, insbesondere wenigstens ein Zustimmtaster oder ein funktional entsprechendes Eingabe- bzw. Betätigungsmittel, am Bewegungsvorgabemittel 3 durch eine Bedienperson manuell derart betätigt wird, dass eine Zustimmung zur Ausführung von potentiell gefährdenden Bewegungen, oder eine Zustimmung zur Veränderung von potentiell sicherheitskritischen Abläufen des Industrieroboters 2 signalisiert wird. Diese Signalisierung wird von der Bedienperson durch Betätigung der Sicherheitsschalteinrichtung 6 ausgelöst und vom Steuerungssystem 1 bzw. vom Bewegungsvorgabemittel 3 oder der Steuervorrichtung 4, 4' als aktive bzw. bewusste Zustimmung zur Ausführung potentiell gefahrbringender Aktionen erkannt. Damit werden vor allem unbeabsichtigte bzw. ungewollte Auslösungen von Aktionen bzw. unabsichtliche Einleitungen von Bewegungen des Industrieroboters 2 in hohem Ausmaß vermieden.

Wie in Fig. 1 schematisch dargestellt, kann die Datenverbindung 14 zwischen der im Bewegungsvorgabemittel 3 integrierten Sensorik 9 und der Steuervorrichtung 4 bzw. 4' durch eine Funkverbindung umgesetzt sein. Alternativ ist es ebenso möglich, die Datenverbindung 13 durch eine Leitungsverbindung auszuführen, wie dies in strichpunktierten Linien dargestellt wurde. Aufgrund der unmittelbaren Nähe zwischen dem Bewegungsvorgabemittel 3 und dem Industrieroboter 2 bzw. dessen Steuervorrichtung 4 ist nämlich auch die Ausbildung einer Leitungsverbindung ohne wesentliche Einbußen an Komfort bzw. Ergonomie möglich.

Die Datenschnittstelle 11 und die damit korrespondierende, weitere Datenschnittstelle an der Steuervorrichtung 4 bzw. 4' können also durch funktechnische Sende- und/oder Empfangsvorrichtungen zum Senden und/oder Empfangen elektromagnetischer Wellen gebildet sein. Diese Sende- und/oder Empfangsvorrichtungen können dabei durch Vorrichtungen entsprechend dem Bluetooth-, WLAN- oder ZigBee-Standard und durch ähnliche aus dem Stand der Technik bekannte, drahtlose Datenübertragungssysteme gebildet sein.

Alternativ ist es auch möglich, dass die Datenschnittstelle 11 im bzw. am Bewegungsvorgabemittel 3 zum Aufbau einer draht- oder kabelgebundenen Datenverbindung vorgesehen ist. Hierfür ist die Datenschnittstelle 11 und die damit korrespondierende, weitere Datenschnittstelle durch elektrische Leitungsschnittstellen gebildet, zwischen welchen eine Kabelverbindung aufgebaut ist, wie dies mit strichpunktierten Linien angedeutet wurde.

Entsprechend einer vorteilhaften Maßnahme ist vorgesehen, dass über die Datenverbindung 13 bzw. 13, 14 zwischen dem händisch geführten Bewegungsvorgabemittel 3 und der Steuervorrichtung 4, 4' zusätzlich zu Informationen über den jeweiligen Betätigungszustand des Bedienelementes 8, welches zum bedienerseitigen Starten oder Auslösen der entsprechenden Bewegungen oder Abläufe des Industrieroboters 2 vorgesehen ist, auch Daten betreffend die Orientierung und/oder die Position des händisch zu führenden Bewegungsvorgabemittels 3 in Bezug auf den dreidimensionalen Raum an die Steuervorrichtung 4, 4' übertragen werden.

Ein Bewegungsvorgabemittel 3 gemäß der zuvor beschriebenen Art weist also wenigstens ein Mittel auf bzw. ist dem Bewegungsvorgabemittel 3 wenigstens ein Mittel, insbesondere die interne und/oder die externe Sensorik 9 bzw. 10 zugeordnet, welches Mittel zur Bestimmung der Orientierung und/oder Lage des Bewegungsvorgabemittels 3 im Raum ausgebildet ist. Diese Informationen können dazu genutzt werden, um die Wirkung eines vorhergehend genannten Bedienelementes 8 für die Positionierung eines Industrieroboters 2 oder einer Werkzeugmaschine abhängig von der Orientierung und/oder Lage des Bewegungsvorgabemittels 3 zu gestalten. Insbesondere kann vorgesehen sein, dass eine Bewegung des Bewegungsvorgabemittels 3 oder die Auslenkung eines Bedienelementes 8 am Bewegungsvorgabemittel 3 in eine bestimmte Richtung zu einer Achsenbewegung in der gleichen Richtung gemäß der Auslenkung führt. Alternativ oder ergänzend dazu können Bewegungen des Bewegungsvorgabemittels 3 auch direkt oder in skalierter Form in eine korrespondierende Bewegung des Industrieroboters 2 umgesetzt werden. Dies ist vergleichbar zu einer Führung des Industrieroboters 2 mit einem virtuell daran befestigten Handgriff.

Das typische Umfeld, diverse Situationen, Problemstellungen und Effekte des gattungsgemäßen Systems werden in den nachfolgenden Absätzen beispielhaft erläutert und zusammengefasst. Derartige Bewegungsvorgabemittel 3 ermöglichen eine sehr einfache und intuitive Positionierung der Achsen bzw. Effektoren von Industrierobotern 2 und können dem Benutzer das Denken und Bedienen in verschiedenen, umschaltbaren Koordinatensystemen ersparen. Dies kommt vor allem auch solchen Personen zugute, welche nur gelegentliche oder sehr einfache Einstellvorgänge vorzunehmen haben. Beispielsweise werden vielfach die Roboterbahnen für Montage- oder Lackierarbeiten an Fahrzeugteilen in wesentlichen Teilen bereits vorab und offline mit entsprechender CAD-Software vorberechnet bzw. erstellt, sodass direkt an der Fertigungsstraße nur mehr einfache Justierungen für einige wenige Referenzpunkte vorgenommen werden müssen. Im Zuge eines solchen Steuerungs- bzw. Programmierungsablaufes gibt es Rückkopplungsschleifen, insbesondere ein sensorisches Feedback ausgehend vom Industrieroboter 2 zur Betriebssteuerung bzw. zur Steuervorrichtung 4 des Industrieroboters 2 und auch ein rein visuelles Feedback, welches sich die Bedienperson durch Beobachtung der Bewegungsabläufe des Industrieroboters 2 holt, wie dies in Fig. 1 schematisch veranschaulicht wurde. Diese Rückkopplungen sind zur Erzielung plangemäßer Abläufe von Bedeutung.

Wie vorhergehend bereits angedeutet, kann es zweckmäßig sein, wenn am Bewegungsvorgabemittel 3 eine Sicherheitsschalteinrichtung 6 in Form von wenigstens einem sogenannten Zustimmtaster vorgesehen ist, welcher Zustimmtaster während eines Bedienvorganges zum Auslösen oder Freigeben einer potenziell gefahrbringenden Verfahrbewegung zu betätigen ist, um dadurch die Verfahrbewegung bzw. die Antriebe freizuschalten. Dazu ist ein solcher elektromechanisch ausgeführter Zustimmtaster von der Bedienperson ausgehend von seiner Ruheposition in eine erste Betätigungsstufe zu überführen und dort während der Verfahrbewegung zu halten. Wird der Zustimmtaster, beispielsweise in einer Gefahrensituation, wieder losgelassen, sodass dieser in den unbetätigten Zustand zurückkehrt, oder von der Bedienperson durch krampfhaft verstärktes Zudrücken in eine zweite Betätigungsstufe bzw. in einen zweiten Betätigungszustand übergeführt, so wird die Verfahrbewegung umgehend gestoppt.

Insbesondere dann, wenn die im Bewegungsvorgabemittel 3 eingesetzte Sensorik 9 durch eine sogenannte Inertialsensorik gebildet ist, kann es bei der vom Steuerungssystem 1 ermittelten Orientierung des Bewegungsvorgabemittels 3 im Raum allmählich zu Diskrepanzen zwischen den Vorgabewerten via das Bewegungsvorgabemittel 3 und den Istwerten des Industrieroboters 2 kommen. Dies ist insbesondere darauf zurückzuführen, dass Intertialsensoren Beschleunigungskräfte erfassen, also als Beschleunigungsdetektoren fungieren, und basierend auf den detektierten Beschleunigungswerten rechnerisch auf den zurückgelegten Weg bzw. auf die absolvierte Bewegung und/oder Orientierung im Raum Rückschluss gezogen wird. Die zu ermittelnde Orientierungsinformation betreffend das Bewegungsvorgabemittel 3 kann also vom Steuerungssystem 1 bzw. von wenigstens einer ihrer Steuervorrichtungen 4, 4'aus sensorischen Inputs der im Bewegungsvorgabemittel 3 integrierten Sensorik 9 und deren rechnerische Weiterverarbeitung generiert werden. Potentielle Fehler bzw. Ungenauigkeiten in der ermittelten Positions- bzw. Orientierungsinformation beruhen dabei sowohl auf Fehlern in den Sensordaten als auch auf numerischen Fehlern bei der Weiterverarbeitung. Aus den Beschleunigungsdaten der Sensorik 9 im bzw. am Bewegungsvorgabemittel 3 entsprechende Geschwindigkeits-, Positions- und/oder Orientierungsinformationen bezüglich des Bewegungsvorgabemittels 3 zu ermitteln, zählt zum Wissen des im betreffenden Sachgebiet tätigen Fachmannes, weshalb darauf nicht näher eingegangen wird. Darüber hinaus sind die notwendigen Signalverarbeitungen bzw. Rechenoperationen der entsprechenden Literatur in zahlreichen Ausführungen zu entnehmen.

Im Bewegungsvorgabemittel 3 gegebenenfalls eingesetzte Intertialsensoren dienen der Messung translatorischer und rotatorischer Beschleunigungskräfte. Durch Kombination mehrere Intertialsensoren zu einer inertialen Messeinheit (IMU; Inertial Measurement Unit) können die Beschleunigungen in Bezug auf die sechs Freiheiten bzw. Freiheitsgrade gemessen werden. Zweckmäßigerweise ist die Sensorik 9 als inertiale Messeinheit (IMU) ausgeführt, welche üblicherweise Translationssensoren zur Detektierung der linearen Beschleunigung und Drehratensensoren zur Messung der Winkelgeschwindigkeit umfasst. Mittels der Beschleunigungssensoren kann dabei die translatorische Bewegung bzw. Bewegungsänderung berechnet werden, während via die Drehratensensoren die jeweilige Rotationsbewegung des Bewegungsvorgabemittels 3 berechnet werden kann.

Die Translationssensoren und/oder die Drehratensensoren können dabei orthogonal angeordnet sein, sodass sie die jeweiligen Beschleunigungen in Richtung der x- bzw. y- bzw. z-Achse beziehungsweise um die x- bzw. y- bzw. z-Achse erfassen können. Zur Verbesserung der Genauigkeit bzw. um die Drift der genannten Sensoren zu korrigieren, können zusätzlich Magnetfeldsensoren, insbesondere Kompasssensoren, verwendet werden.

Die gegebenenfalls vorgesehene externe Sensorik 10 kann insbesondere ein Kamerasystem mit nachgeschalteter Bildauswertung und/oder eine auf Laufzeitberechnungen basierendes Erfassungssystem zur Ermittlung der Position und/oder Orientierung des Bewegungsvorgabemittels 3 im Raum, insbesondere von dessen sogenannter Pose oder räumlichen Lage, umfassen.

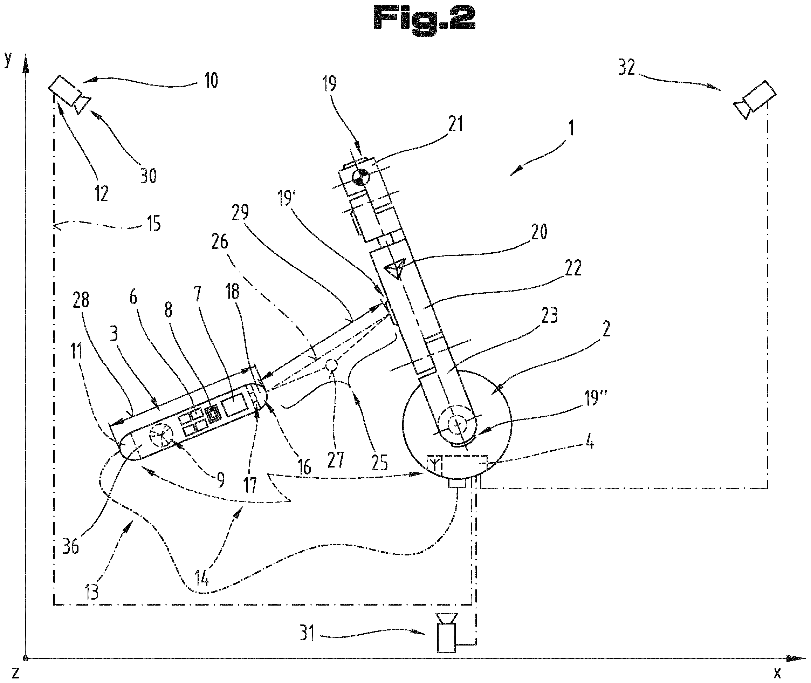

Wie aus den Fig. 1, 2 beispielhaft und schematisch ersichtlich ist, weist das Bewegungsvorgabemittel 3 zumindest einen bildgebenden Sensor 16 und/oder zumindest einen abstandssensitiven Sensor 17 auf. Insbesondere kann vorgesehen sein, dass entweder nur zumindest ein bildgebender Sensor 16 oder nur ein abstandssensitiver Sensor 17 vorgesehen ist. Entsprechend der Ausführung gemäß Fig. 2 ist sowohl zumindest ein bildgebender Sensor 16 als auch zumindest ein abstandssensitiver Sensor 17 implementiert.

Der bildgebende Sensor 16 im bzw. am Bewegungsvorgabemittel 3 ist typischerweise durch eine Kameraeinheit 18 bzw. ein sogenanntes CCD-Modul gebildet. Der zumindest eine abstandssensitive Sensor 17 kann zweckmäßigerweise durch einen Kurzstrecken-Abstandssensor in Art eines Ultraschallsensors, eines Lichtreflexionssensors, eines Magnetfeldsensors oder eines RFID-Sensors bzw. Transponder-Lesegerätes gebildet sein. Um 3D-Koordinaten bzw. dreidimensionale Relativpositionen ermitteln zu können, kann es zweckmäßig sein, wenn ein solcher abstandssensitiver Sensor 17 zumindest drei voneinander beabstandete Einzelsensoren aufweist, wie dies in Fig. 2 schematisch veranschaulicht wurde. Insbesondere kann eine Mehrzahl von zueinander distanzierten Einzelsensoren einen solchen abstandssensitiven Sensor 17 ausbilden, wobei die Einzelsensoren zur gemeinsamen Erfassung einer Relativposition in Bezug auf wenigstens eine Referenzmarke 19, 19', 19" vorgesehen sind bzw. wobei wenigstens ein abstandssensitiver Sensor 17 zur datentechnischen Erfassung der Eigenart bzw. der Kennung oder der Daten von solchen Referenzmarken 19, 19', 19" vorgesehen sind. Der bildgebende Sensor 16 kann zur Erfassung von Bilddaten bzw. zur Erfassung einer zeitlichen Abfolge von Bilddaten in Art einer Videosequenz vorgesehen sein. Der bildgebende Sensor 16 kann aber auch zur datentechnischen Erfassung der Eigenart bzw. der Kennung oder der Daten von solchen Referenzmarken 19, 19', 19" vorgesehen sein.

Wie vorstehend bereits erwähnt, ist der zumindest eine bildgebende und/oder abstandssensitive Sensor 16, 17 zur Erfassung von wenigstens einer Referenzmarke 19, 19', 19" am Industrieroboter 2 bzw. an einer zu bewegenden Maschine bzw. dessen Maschinenteil vorgesehen. Eine solche vom jeweils eingesetzten Sensor 16, 17 zu erfassende Referenzmarke 19, 19', 19" kann in Art einer datentechnischen Kennung bzw. eines maschinenlesbaren Informationsträgers verstanden werden. Insbesondere kann eine solche vom jeweils eingesetzten Sensor 16, 17 zu erfassende Referenzmarke 19, 19', 19" als zweidimensionale Markierung, beispielsweise als Barcode oder QR-Code ausgeführt sein. Aber auch ein unverkennbares bzw. datentechnisch eindeutiges Muster kann als zweidimensionale Markierung verstanden werden. Alternativ oder in Kombination dazu kann eine solche Referenzmarke 19, 19', 19" auch als 3D-Markierung, insbesondere als räumlicher Körper, wie zum Beispiel als Quader oder als Tetraeder 20 - Fig. 2 - ausgeführt sein. Vorzugsweise sind mehrere solcher Referenzmarken 19, 19', 19" an der zu steuernden Maschine bzw. an dem zu steuernden Industrieroboter 2 verteilt angeordnet bzw. befestigt. Vorzugsweise ist jedem oder zumindest den meisten der Gelenkarme 21, 22, 23 des Industrieroboters 2 jeweils zumindest eine optisch oder anderweitig sensorisch erfassbare Referenzmarkierung 19, 19', 19" zugeordnet. Zweckmäßig kann es auch sein, wie dies in Fig. 1 veranschaulicht ist, dem Endeffektor 24, insbesondere dem jeweiligen Werkzeug, wie zum Beispiel einem Schweißbrenner, einem Greifinstrument, einer Lackiereinrichtung oder dergleichen, eine oder mehrere Referenzmarken zuzuweisen. Zweckmäßig ist es dabei, wenigstens einem, insbesondere allen rotatorisch bzw. translatorisch beweglichen Maschinenteilen bzw. Gelenkarmen 21, 22, 23 des Industrieroboters 2 (sowie bedarfsweise einem in der Figur nicht gezeigten und vom Industrieroboter 2 bewegten Werkstück) jeweils eine Referenzmarke 19, 19', 19" zuzuweisen, wobei zweckmäßigerweise die einzelnen jeweils eingesetzten Referenzmarken 19, 19', 19" individuell unterscheidbar sind, also eine unverwechselbare, eindeutige Kennung tragen bzw. darstellen.

Entsprechend einer zweckmäßigen Maßnahme ist im Steuerungsablauf vorgesehen, dass der zumindest eine Sensor 16, 17 mit wenigstens einer Referenzmarke 19, 19', 19" an einem zu bewegenden Maschinenteil bzw. einem entsprechenden Gelenkarm 21, 22, 23, insbesondere mit einer vom Benutzer bewusst selektierten Referenzmarke, in eine ausgewählte räumliche Relativposition versetzt wird. Insbesondere ist vorgesehen, einen räumlichen Konnex zwischen zumindest einer Referenzmarke 19, 19', 19" und dem Bewegungsvorgabemittel 3 aufzubauen, indem dessen bildgebender und/oder abstandssensitiver Sensor 16, 17 genutzt bzw. eingesetzt wird. Insbesondere wird dabei in einem ersten bzw. initialen Verfahrensschritt unter Verwendung bildbasierender und/oder abstandsbasierender Daten aus der relativen Lage zwischen dem Bewegungsvorgabemittel 3 und der jeweiligen Referenzmarke 19, 19', 19" eine Koppelbedingung 25 festgelegt. Eine derartige Koppelbedingung 25 ist beispielsartig in Fig. 1 mit strichlierten Linien symbolisiert. Eine solche Koppelbedingung 25 zwischen dem Bewegungsvorgabemittel 3 und der ausgewählten Referenzmarke 19, 19', 19" kann dabei als starre Koppelbedingung 25 oder durch eine um bestimmte Freiheitsgrade gelenkig gedachte Koppelbedingung 25 definiert sein. Diese Koppelbedingung 25 ist dabei rein virtuell zu verstehen, insbesondere ist dabei keine mechanisch starre Kopplung bzw. keine physische Bindung zwischen dem Bewegungsvorgabemittel 3 und dem jeweiligen Maschinenteil bzw. Industrieroboter 2 vorgesehen. Wesentlich ist dabei, dass in einem ersten bzw. initialen Schritt eine definierte Koppelbedingung 25 aufgebaut wird. In einem zweiten bzw. nachfolgenden Verfahrensschritt wird dann während einer Bewegung des Bewegungsvorgabemittels 3 das die entsprechende Referenzmarke 19 bzw. 19' bzw. 19" tragende Maschinenteil bzw. ein jeweiliger Gelenkarm 21, 22, 23 steuerungstechnisch derart nachgeführt, dass im Rahmen der technischen Grenzen der Maschine bzw. des Maschinenteils die im ersten Verfahrensschritt festgelegte Koppelbedingung 25 eingehalten bzw. bestmöglich eingehalten wird. Insbesondere unterliegen Industrieroboter 2 bzw. deren Gelenkarme 21, 22, 23 technischer Grenzen hinsichtlich ihrer Kinematik, Dynamik und Zulässigkeit der Bewegungen.

Entsprechend einer zweckmäßigen Maßnahme ist dabei vorgesehen, dass die steuerungstechnische Nachführung des die jeweilige Referenzmarke 19, 19', 19" tragenden Maschinenteils bzw. Gelenkarms 21, 22, 23 entsprechend dem nachfolgenden bzw. zweiten Verfahrensschritt unter Verwendung bildbasierender oder abstandsbasierender Daten und/oder von Daten von der im Bewegungsvorgabemittel 3 integrierten Sensorik 9, insbesondere von Inertial- bzw. Beschleunigungssensoren, und/oder von Daten der externen Sensorik 10 zur Bestimmung der Position oder Positionsveränderung des Bewegungsvorgabemittels 3 erfolgt. Diese steuerungstechnische Nachführung des Industrieroboters 2 bzw. von zumindest einem seiner Gelenkarme 21, 22, 23 basierend auf Daten der internen Sensorik 9 und/oder der externen Sensorik 10 wurde im Vorhergehenden bereits ausführlich erläutert.

Wie ebenso bereits dargelegt, kann die festgelegte Koppelbedingung 25 zwischen dem Bewegungsvorgabemittel 3 und dem jeweiligen, eine Referenzmarke 19, 19', 19" tragenden Maschinenteil eine starr gekoppelte, virtuelle Verbindung beschreiben. Das heißt, dass die sich zeitlich verändernde Ausrichtung und Position des Bewegungsvorgabemittels 3 auf die Bewegung des Maschinenteils bzw. Gelenkarmes 21, 22, 23 übertragen wird, als ob das Bewegungsvorgabemittel 3 und das Maschinenteil eine baulich starre Einheit bilden würden. Entsprechend einer Ausführungsform ist es auch möglich, dass die festgelegte Koppelbedingung 25 eine um zumindest eine Achse gelenkige, virtuelle Verbindung 27 - in Fig. 2 mit strichlierten Linien dargestellt - beschreibt. Demgegenüber kann auch die bereits erwähnte, bewegungsstarr gekoppelte, virtuelle Verbindung 26 vorgesehen sein, wie sie in Fig. 2 mit strichpunktierter Linie symbolisiert wurde.

Zweckmäßig kann es auch sein, dass für jene Freiheitsgrade der Maschinenbewegung, welche nicht bereits durch die Koppelbedingung 25 und die Bewegung des Bewegungsvorgabemittels 3 festgelegt sind, zusätzliche Nebenbedingungen entweder automatisch, oder durch eine Benutzereingabe am Bewegungsvorgabemittel 3 bzw. am mobilen Handterminal 5, oder an einer stationären Bedienpult festlegbar sind. Eine solche Nebenbedingung kann dadurch festgelegt sein, dass während der Nachführung die Orientierung eines bestimmten beweglichen Maschinenteils im Raum beibehalten werden soll, oder dass die Position eines mit einem beweglichen Maschinenteil verknüpften Punktes im Raum unverändert sein soll, oder dass sowohl die Lage als auch die Orientierung eines beweglichen Maschinenteils konstant gehalten werden soll. Solche Nebenbedingungen können beispielsweise via die Bedienelemente 8 am Bewegungsvorgabemittel 3 ausgewählt bzw. voreingestellt werden. Solche Nebenbedingungen können aber auch fix an die Identität einer kodierten Referenzmarke 19, 19', 19" gekoppelt sein und es können an einem dezidierten Maschinenteil mehrere, auch für den Benutzer augenscheinlich, z.B. farblich oder durch Symbole, unterscheidbare Markierungen angeordnet sein, so dass durch die Auswahl einer bestimmten Referenzmarke 19, 19', 19" aus dieser Mehrzahl von Referenzmarken 19, 19', 19" an einem dezidierten Maschinenteil bzw. Gelenkarm 21, 22, 23 automatisch die entsprechenden Nebenbedingungen benutzerseitig ausgewählt werden. Dies ermöglicht die Einsparung von Bedienelementen und kann auch ein rasches und intuitives Arbeiten ermöglicht werden.

Zweckmäßig ist es auch, wenn verfahrensgemäß die Nachführung des beweglichen Maschinenteils im Zuge des zweiten bzw. nachfolgenden Verfahrensschrittes nur während oder nach einem Freigabebefehl durch die Bedienperson erfolgt, insbesondere nur während der Betätigung eines Bewegungskopplungs-Befehlstasters oder einer Sicherheitsschalteinrichtung 6 in der Art einer Freigabe- oder Zustimmtaste.

Entsprechend einer besonders zweckmäßigen Maßnahme ist vorgesehen, dass eine Mehrzahl von jeweils unterscheidbar codierten Referenzmarken 19, 19', 19" an verschiedenen Positionen an einem beweglichen Teil oder an mehreren beweglichen Teilen der Maschine bzw. des Industrieroboters 2 vorgesehen ist. Mittels dem bildgebenden und/oder abstandssensitiven Sensor 16, 17 des Bewegungsvorgabemittels 3 ist dabei seitens des Benutzers die Kodierung oder Eigenart der jeweiligen Referenzmarke 19, 19', 19" erfassbar. Insbesondere ist eine solche Referenzmarke 19, 19', 19" im Zuge des Einlesens für die Festlegung der Koppelbedingung 25 seitens des Benutzers selektiv auswählbar, indem eine Bedienperson das Bewegungsvorgabemittel 3 derart positioniert, dass der bildgebende oder abstandssensitive Sensor 16, 17 die Kodierung der jeweils benötigten Referenzmarke bzw. der jeweils gewünschten Referenzmarke 19, 19', 19" erfasst bzw. erfassen kann. Insbesondere ist vorgesehen, dass mittels dem wenigstens einen bildgebenden bzw. abstandssensitiven Sensor 16, 17 des Bewegungsvorgabemittels 3 eine an verschiedenen Maschinenteilen bzw. Gelenkarmen 21, 22, 23 des Industrieroboters 2 jeweils angeordnete Referenzmarkierung 19, 19', 19" selektiv eingelesen bzw. detektiert und erfasst werden kann. Dieser Auswahlvorgang kann auch eine vorausgehende oder abschließende Bedienhandlung in der Art eines Tastendrucks am Bewegungsvorgabemittel 3 umfassen. Dies ist aber nicht zwingend, da die bloße Erfassung prinzipiell ausreichend ist.

Wie bereits erläutert, sind zumindest einzelne der Referenzmarken 19, 19', 19" sensorisch und steuerungstechnisch unterscheidbar ausgebildet, um so steuerungstechnische Rückschlüsse auf die jeweilige Anbringungsposition an der Maschine bzw. am Maschinenteil zu ermöglichen. Die Referenzmarken können dabei maschinenlesbare Informationen, insbesondere codierte Informationen wie Barcodes umfassen. Es ist aber auch möglich, Klartextinformationen vorzusehen, welche via den bildgebenden Sensor 16 und eine nachgeschaltete OCR-Erfassung bzw. OCR-Auswertung gelesen werden können. Die entsprechend maschinencodierten und/oder in Klartext dargestellten Informationen der Referenzmarken 19, 19', 19" können dabei unter anderem über die jeweilige Anbringungsposition an der Maschine oder am jeweiligen Maschinenteil Auskunft geben, um so den weiteren handgeführten Steuerungsablauf mittels dem Bewegungsvorgabemittel 3 für die Bedienperson zu begünstigen bzw. möglichst intuitiv und einfach zu gestalten. Die Informationen der Referenzmarken 19, 19', 19" können dabei per se die jeweils relevanten Daten umfassen und/oder datentechnische Links zu dahinterliegenden Datensätzen darstellen.

Insbesondere kann es zweckmäßig sein, wenn mit der Kodierung einer Referenzmarke 19, 19', 19" Eigenschaften und Informationen datentechnisch verknüpft sind. Dies begünstigt die Flexibilität bzw. Variabilität des Steuerungssystems 1. Dabei können diese Eigenschaften und Informationen die Befestigungsposition der Referenzmarke 19, 19', 19" an der Maschine darstellen, einen beschreibenden Namen der Referenzmarke darstellen, eine Kennung oder Bezeichnung des die Referenzmarke tragenden Maschinenteils bzw. Gelenkarms 21, 22, 23 darstellen, oder zusätzliche Bedingungen zur Festlegung von nicht durch die Koppelbedingung 25 festgelegten Freiheitsgraden für die virtuell gekoppelte Bewegung darstellen.

Entsprechend einer zweckmäßigen Maßnahme ist vorgesehen, dass der Bedienperson über ein Ausgabemittel des Bewegungsvorgabemittels 3, insbesondere über dessen Display 7 bzw. über ein sonstiges visuell wahrnehmbares Ausgabemittel signalisiert wird, wenn der bildgebende oder abstandssensitive Sensor 16, 17 eine Referenzmarke 19, 19', 19" erfasst hat. Dadurch kann angezeigt werden, ob das Einlesen einer von der Bedienperson anvisierten bzw. zur Auswahl vorgesehenen Referenzmarke 19, 19', 19" tatsächlich Erfolg gehabt hatte. Ferner kann vorgesehen sein, dass der Bedienperson über ein Ausgabemittel des Bewegungsvorgabemittels 3, insbesondere über dessen Display 7, zumindest Teile der mit der Referenzmarke 19, 19', 19" datentechnisch verknüpften bzw. ausgelesenen Eigenschaften und Informationen ausgegeben werden.

Zweckmäßig kann es auch sein, wenn die Koppelbedingung 25 durch Verbringen des Bewegungsvorgabemittels 3 durch eine Bedienperson in eine von ihr gewünschte Relativposition zur Referenzmarke 19, 19', 19" vordefiniert bzw. quasi voreingestellt wird. Die anschließende Festlegung oder Aktivierung der von der Bedienperson beabsichtigten Koppelbedingung 25 kann zweckmäßigerweise über eine anschließende Betätigung eines Eingabe- bzw. Betätigungsmittels, insbesondere eines bestimmten Bedienelementes 8 am Bewegungsvorgabemittel 3 erfolgen.

Ferner kann es zweckmäßig sein, wenn die Relativposition, aus der die Koppelbdingung 25 festgelegt wird bzw. festgelegt werden kann, technisch definiert begrenzt ist. Dies kann insbesondere durch eine definiert begrenzte Distanz zwischen der Referenzmarke 19, 19', 19" und dem Bewegungsvorgabemittel 3, oder durch eine Richtungsvorgabe innerhalb eines bestimmten Raumsegments in Bezug auf die Referenzmarke 19, 19', 19" und/oder in Bezug auf das Bewegungsvorgabemittel 3 definiert sein.

Entsprechend einer praktikablen Maßnahme kann vorgesehen sein, dass die Referenzmarke 19 oder wenigstens eine von mehrfach angeordneten Referenzmarken 19, 19', 19" durch eine 2D-Markierung in Art eines Barcodes, eines Symbols, einer Grafik oder eines eindeutigen, zufallsartigen Musters gebildet ist. Alternativ oder in Kombination dazu kann vorgesehen sein, dass die Referenzmarke 19 oder wenigstens eine von mehrfach angeordneten Referenzmarken durch eine 3D-Markierung in Art eines Quaders, eines Tetraeders 20, in Art von kartesischen Zeigerachsen, oder in Art eines sonstigen 3D-Objektes an der gesteuert zu bewegenden Maschine gebildet ist.

Entsprechend einer vorteilhaften Ausführungsform ist das Bewegungsvorgabemittel 3 stabförmig bzw. leistenartig ausgeführt, wobei es eine Länge 28 zwischen 10 cm und 100 cm aufweisen kann. Der zumindest eine bildgebende Sensor 16 bzw. der zumindest eine abstandssensitive Sensor 17 ist dabei zweckmäßigerweise an einem von einem Griffende bzw. Griffabschnitt 36 abgewandten Ende des Bewegungsvorgabemittels 3 angeordnet, wie dies in Fig. 2 schematisch angedeutet wurde. Insbesondere ist es zweckmäßig, wenn das Bewegungsvorgabemittel 3 zur berührungslosen, distanzbehafteten Bewegungskopplung gegenüber der zu steuernden Maschine oder einem ausgewählten Maschinenteil ausgebildet ist, wobei eine Distanz 29 zwischen dem Bewegungsvorgabemittel 3 und der Maschine und dem Maschinenteil einen Distanzwert ausgewählt aus einem Bereich zwischen 20 cm und 200 cm aufweisen kann.

Gemäß einer zweckmäßigen Ausführung kann auch vorgesehen sein, dass die virtuelle Kopplung bzw. die initial aufgebaute Koppelbedingung 25 als eine elastisch nachgiebige, mechanische Verbindung 26, 27 rechnerisch modelliert wird. Diese rechnerische Modellbildung wird dabei bevorzugt innerhalb der Steuervorrichtung 4, 4' ausgeführt. Die jeweilige rechnerische Modellierung kann dabei die vorhergehend erläuterte starr gekoppelte Verbindung 26 - Fig. 2 - bzw. vor allem die vorhergehend erläuterte gelenkige Verbindung 27 modellbasiert nachstellen bzw. errechnen. Alternativ oder in Kombination zu einer derartigen Modellbildung ist es auch möglich, dass für das eine ausgewählte Referenzmarke 19, 19', 19" tragende Maschinenteil, und folglich für den jeweils selektierten und zu bewegenden Gelenkarm 21, 22, 23 der Einfluss einer physikalischen Massenträgheit und/oder der Einfluss einer Reibungskraft in Bezug auf die nachfolgend auszuführende Bewegung rechnerisch modelliert bzw. simuliert wird. Es ist also auch möglich, dass die physikalischen Einflussfaktoren wie Massenträgheit bzw. Reibungskraft in ein Simulationsmodell integriert werden und das jeweilige rechnerische Simulationsergebnis auf die Koppelbedingung 25 bzw. auf die Art und Weise der Nachführung des zu bewegenden Maschinenteils bzw. des zu verstellenden Gelenkarmes 21, 22, 23 rechnerisch und steuerungstechnisch Einfluss nimmt.

Wie weiters am besten aus Fig. 2 ersichtlich ist, kann die externe Sensorik 10 durch eine Mehrzahl von räumlich verteilt angeordneten Kameras 30, 31, 32 definiert sein. Vorzugsweise sind zumindest drei Kameras 30, 31, 32 vorgesehen, deren Relativposition zueinander definiert ist bzw. deren jeweilige Position und Ausrichtung im Raum definiert und steuerungsseitig bekannt ist. Anhand der jeweiligen Bilddaten dieser den Arbeitsbereich des Industrieroboters 2 und der Bedienperson aufnehmenden Kameras 30, 31, 32 bzw. via die jeweiligen Bildsequenzen kann dann in an sich bekannter Art und Weise die jeweilige Ist-Lage bzw. Orientierung und Position des Bewegungsvorgabemittels 3 im Raum rechnerisch ermittelt werden. Diese Berechnungen können grundsätzlich mittels der internen und/oder externen Steuervorrichtung 4, 4' des Roboter-Steuerungssystems 1 vorgenommen werden. Vor allem unter Einbeziehung der Ist-Daten, welche der Steuervorrichtung 4, 4' in Bezug auf die Stellung bzw. Orientierung des Industrieroboters 2 vorliegen bzw. bekannt sind, kann sodann ein Abgleich bzw. eine Nachführung in Bezug auf die Bewegungsvorgaben des Bewegungsvorgabemittels 3 erfolgen. Insbesondere wird es dadurch ermöglicht, dass der Industrieroboter 2 den Vorgaben des Bewegungsvorgabemittels 3 identisch oder nahezu identisch folgen kann. Um diese Bewegungsnachführung zu ermöglichen, sind der dem Industrieroboter 2 zugeordneten Steuervorrichtung 4 bzw. 4' die Ist-Positionen und Ist-Orientierungen der einzelnen Teile bzw. Komponenten des Industrieroboters 2 in Bezug auf den dreidimensionalen Raum stets bekannt. Durch Abgleich zwischen den Soll-Orientierungs- und/oder Soll-Positionsdaten (Soll-Pose) seitens des Bewegungsvorgabemittels 3, insbesondere von Seiten der internen und/oder externen Sensorik 9, 10 mit den Ist-Orientierungs- und/oder Ist-Positionsdaten (Ist-Pose) des Industrieroboters 2, welche Daten der Steuervorrichtung 4, 4' stets vorliegen, ist sodann eine steuerungstechnisch exakte Nachführung bzw. zumindest eine bestmögliche Nachführung der Bewegungen des Industrieroboters 2 bzw. seiner Gelenkarme 21, 22, 23 gegenüber den Bewegungen des Bewegungsvorgabemittels 3 ermöglicht.

Entsprechend einer praktikablen Maßnahme kann das Bewegungsvorgabemittel 3 durch ein standardmäßig verfügbares, marktübliches Smartphone oder durch einen Tablet-PC gebildet sein, auf welchen Komponenten die entsprechende Software zur Umsetzung des angegebenen Verfahrens ausgeführt wird.

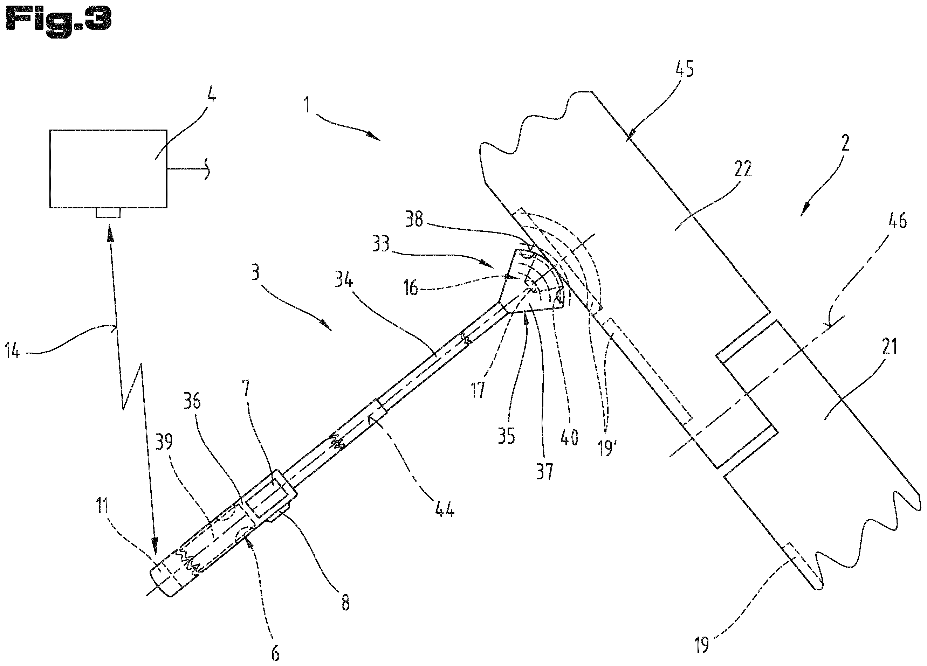

In Fig. 3 ist eine weitere Ausführungsform eines durch eine Bedienperson zu führenden, steuerungstechnischen Bewegungsvorgabemittels 3 zur Bewegungsbeeinflussung bzw. zum sogenannten Teachen eines Industrieroboters 2 bzw. einer ähnlichen Maschine schematisch veranschaulicht.

Auch hierbei werden Bewegungen des Bewegungsvorgabemittels 3 in korrespondierende Bewegungen des Industrieroboters 2 umgesetzt. Ein Unterschied zu der vorhergehend beschrieben Ausführungsform besteht darin, dass hierbei das Bewegungsvorgabemittel 3 an der zu steuernden Maschine, insbesondere an beweglichen Teilen bzw. an den zu bewegenden Teilen bzw. Gelenkarmen 21, 22, 23 abgestützt werden kann bzw. abgestützt wird.

Das entsprechende Bewegungsvorgabemittel 3 weist dabei zumindest ein elastisch nachgiebiges Kontaktierungs- und Beabstandungselement 33 auf. Dieses Kontaktierungs- und Beabstandungselement 33 ist zum Kontaktieren bzw. Berühren eines steuerungstechnisch angekoppelten Maschinenteils, beispielsgemäß des Gelenkarms 22 des Industrieroboters 2, im Nahbereich der bzw. im Nahbereich um die jeweilige Referenzmarke 19, 19', 19", beispielsgemäß im Nah- bzw. Erfassungsbereich der Referenzmarke 19', vorgesehen. Insbesondere stellt dieses Bewegungsvorgabemittel 3 mit seinem Kontaktierungs- und Beabstandungselement 33 im Nahbereich der Referenzmarke 19' oder alternativ irgendwo am zu verstellenden Maschinenteil, welches die ausgewählte Referenzmarke 19' trägt, eine reib- oder formschlüssige Kraftübertragung zwischen dem bewegten Maschinenteil, beispielsgemäß dem Gelenkarm 22, und dem Bewegungsvorgabemittel 3 her. Insbesondere wird durch diese Kraftübertragung bzw. durch das mechanische Anliegen bzw. durch das lastübertragende Abstützen des Bewegungsvorgabemittels 3 am zu bewegenden Maschinenteil, beispielsgemäß dem Gelenkarm 22, der Bedienperson, also jener Person welche das Bewegungsvorgabemittel 3 führt bzw. haltert, ein haptisches Feedback in Bezug auf die von der Steuervorrichtung 4, 4' letztendlich ausgeführte Maschinenbewegung vermittelt. Dies begünstigt die Ergonomie bzw. Intuitivität der Maschinenbedienung, insbesondere der Bewegungsführung des Industrieroboters 2. Diese Berührung bzw. Abstützung und Kontaktierung des Bewegungsvorgabemittels 3 an einer Oberfläche des ausgewählten Maschinenteils bzw. Gelenkarms 21, 22, 23 kann dabei zweckmäßigerweise nicht-leitend, insbesondere elektrisch isolierend ausgeführt sein. Jedenfalls ist eine elektrisch leitende Verbindung zwischen dem Bewegungsvorgabemittel 3 bzw. zwischen dessen Kontaktierungs- und Beabstandungselement 33 oder dem Sensorkopf 37 und dem jeweiligen Maschinenteil, beispielsgemäß dem Gelenkarm 22, nicht zwingend erforderlich bzw. nicht notwendig.

Das elastisch nachgiebige Kontaktierungs- und Beabstandungselement 33 kann dabei eine teleskopische bzw. längenveränderliche Kopplungsstange 34 und/oder ein Pufferelement 35 umfassen, welches Pufferelement 35 eine gegenüber Metall- oder Kunststoff-Oberflächen des Industrieroboters 2 reibungserhöhende Kontaktierungsfläche 38, beispielsweise aus einem elastomeren Kunststoff, aufweisen kann.

Im Falle der Ausbildung einer längenvariablen Kopplungsstange 34 kann diese durch teleskopisch zueinander verstellbare Stangenelemente definiert sein. Für den Fall, dass an einem von einem Griffabschnitt 36 abgewandten Ende des Bewegungsvorgabemittels 3 ein Pufferelement 35 bzw. ein dementsprechender Sensorkopf 37 ausgebildet ist, kann eine elastisch nachgiebige bzw. eine unter gewisser mechanischer Wechselwirkung stehende mechanische Kopplung und Kraftübertragung zwischen dem Benutzer bzw. der Bedienperson und den jeweils ausgeführten Bewegungen des Industrieroboters 2 aufgebaut werden. Insbesondere wird dadurch ein haptisches Feedback für die Bedienperson gewährleistet, sodass die Bedienergonomie und die erzielbare Präzision der Bewegung in Verbindung mit dem entsprechend ausgeführten Bewegungsvorgabemittel 3 begünstigt werden.

Der Tast- bzw. Sensorkopf 37, welcher entweder nachgiebig oder elastisch nachgiebig an einem gegenüber einem Griffabschnitt 36 des Bewegungsvorgabemittels gegenüberliegenden Ende gelagert ist und/oder linear verstellbar bzw. teleskopisch verstellbar gelagert ist und/oder auf sonstige Weise elastisch rückstellend bzw. relativ zum Griffabschnitt 36 des Bewegungsvorgabemittels 3 einstellbar gehaltert ist, kann den wenigstens einen bildgebenden Sensor 16 und/oder den wenigstens einen abstandssensitiven Sensor 17 aufweisen bzw. tragen. Der abstandssensitive Sensor 17 kann insbesondere durch ein RFID-Lesegerät, durch einen Magnetfeldsensor, oder durch einen sonstigen abstandssensitiven Sensor definiert sein. Wesentlich ist, dass der jeweilige abstandssensitive Sensor 17 im Bewegungsvorgabemittel 3 die entsprechende Referenzmarke 19, 19', 19", beispielsgemäß die Referenzmarke 19' am zu bewegenden Gelenkarm 22, detektierten bzw. erfassen kann. Alternativ oder in Kombination dazu ist es auch möglich, dass der Sensorkopf 37 einen bildgebenden Sensor 16 in Art eines CCD-Moduls bzw. einer Miniatur-Videokamera umfasst, um so die optischen Informationen bzw. Eigenschaften einer optischen Referenzmarke 19, 19', 19" erfassen bzw. aufnehmen zu können.

Zweckmäßigerweise ist der bildgebende Sensor 16 bzw. der abstandssensitive Sensor 17 im Sensorkopf 37 mit einer elektronischen Auswertungsvorrichtung 39 im Bewegungsvorgabemittel 3 verbunden, insbesondere leitungsverbunden. In der elektronischen Auswertungsvorrichtung werden die jeweiligen Signale der Sensoren 16 bzw. 17 entweder vorverarbeitet, oder zu einem überwiegenden Anteil verarbeitet und ausgewertet. Via die datentechnische Schnittstelle 11 des Bewegungsvorgabemittels 3 kann - wie vorhergehend bereits beschrieben - eine leitungsgebundene und/oder drahtlose Übertragung der jeweils systemrelevanten Informationen bzw. Daten an die Steuervorrichtung 4 bzw. 4' - Fig. 1 - des Industrieroboters 2 übermittelt werden.

Zur Daten-Visualisierung bzw. zur optischen Signalisierung systemrelevanter Zustände und/oder zur Darstellung von Auswahl- bzw. Eingabemenüs kann am Bewegungsvorgabemittel 3 ein Ausgabemittel in Form eines Displays 7 vorgesehen sein. Zudem kann, wie vorhergehend ebenso bereits beschrieben, am Bewegungsvorgabemittel 3 wenigstens ein Eingabeelement, beispielsweise in Form eines Bedienelementes 8 und/oder einer Sicherheitsschalteinrichtung 6 ausgebildet sein.

Bei der Ausführungsform gemäß Fig. 3 sind insbesondere am Ende eines Stabes, beispielsgemäß am Ende einer teleskopierbaren bzw. längenveränderlichen Kopplungsstange 34, eine oder mehrere miniaturisierte Kameras, das heißt bildgebende Sensoren 16, ausgebildet. Am Industrieroboter 2 selbst und/oder auf den Werkstücken bzw. auf den diversen Gelenkarmen 21, 22, 23 sind datentechnisch voneinander unterscheidbare, maschinenlesbare Referenzmarken 19, 19', 19", beispielsgemäß in Art von Bildmarken, ausgebildet. Diese Bildmarken können durch QR-Codes oder dergleichen gebildet sein und unmittelbar an den jeweiligen Maschinenkomponenten aufgeklebt sein. Durch Drücken einer Befehlstaste, beispielsgemäß eines Bedienelementes 8 am Bewegungsvorgabemittel 3 wird durch die Steuerungssoftware ein Bild der Referenzmarkierung 19' aufgenommen und sodann der Abstand und die Lage zur Kamera bzw. zum bildgebenden Sensor 16, insbesondere zum Tast- oder Sensorkopf 37 festgestellt. Diese Daten werden als Referenz für die weiteren Soll-Lagen bzw. Soll-Posen des Industrieroboters 2 verwendet. Die jeweiligen Bild- bzw. Referenzmarken 19, 19', 19" können dabei auch Informationen darüber enthalten, an welchem Punkt bzw. an welcher Position der Industrieroboter 2 virtuell festgehalten bzw. gekoppelt wird, sodass die Steuerungssoftware der Steuervorrichtung 4, 4' - Fig. 1, 2 - die kinematischen Bewegungen des Industrieroboters 2 berechnen und sodann entsprechend durchführen bzw. nachführen kann.

Anstelle der Ausbildung von optisch erfassbaren Referenzmarken 19, 19', 19" ist es auch möglich, die Referenzmarken 19, 19', 19" durch eindeutige, voneinander unterscheidbare RFID-Tags zu bilden und die Sensorik 17 im Bewegungsvorgabemittel durch eine RFID-Lesevorrichtung zu definieren.

Entsprechend einer vorteilhaften Ausführungsform kann vorgesehen sein, dass am Tast- bzw. Sensorkopf 37, insbesondere in der Nähe des bildgebenden Sensors 16, wenigstens eine Lichtquelle 40, insbesondere eine Beleuchtungsvorrichtung zur Verbesserung der Bildaufnahmen der Kamera bzw. des bildgebenden Sensors 16 ausgebildet ist.

Nachdem die gewünschte Bewegungskopplung zwischen dem Bewegungsvorgabemittel 3 und dem zu bewegenden Maschinenteil, beispielsgemäß dem Gelenkarm 22, aufgebaut wurde, führt der Industrieroboter 2 bzw. dessen Gelenkarm 2 jene Bewegungen aus, welche mittels dem Bewegungsvorgabemittel 3 ausgeführt werden. Im Zuge der Bewegungsnachführung wird dabei erreicht, dass der Industrieroboter 2 bzw. dessen Steuervorrichtung 4, 4' den mechanischen Kontakt bzw. die Berührung zwischen dem Tast- bzw. Sensorkopf 37 und dem jeweiligen Maschinenteil aufrecht hält bzw. wird dabei bewerkstelligt, dass eine gegenseitige Abstütz- bzw. Anlagekraft aufrecht erhalten wird bzw. bestmöglich aufrecht erhalten wird. Insbesondere erfolgt zumindest phasenweise bzw. zumindest abschnittsweise eine lastübertragende Abstützung zwischen dem Tast- bzw. Sensorkopf 37, insbesondere zwischen dem Kontaktierungs- und Beabstandungselement 33 des Bewegungsvorgabemittel 3, und der jeweiligen Gehäuse- bzw. Gelenkarm-Oberfläche des Industrieroboters 2, während die Steuervorrichtung 4, 4' - Fig. 1 - den Industrieroboter 2 entsprechend den Bewegungsvorgaben des Bewegungsvorgabemittels 3 bewegt.

Die initial ausgewählte und erfasste Referenzmarke 19, 19' bzw. 19" kann dabei als zusätzliches steuerungstechnisches Hilfsmittel eingesetzt werden bzw. fungiert die im einleitenden Schritt selektierte Referenzmarke 19' - wie dies im Ausführungsbeispiel gem. Fig. 3 schematisch veranschaulicht wurde - jedenfalls zur einfachen Auswahl bzw. Selektion von jenem Maschinenteil des Industrieroboters 2, beispielsgemäß des Gelenkarms 22, mit welchem eine Interaktion mit der Bedienperson bzw. dem Bewegungsvorgabemittel 3 gewünscht ist. Entsprechend einer zweckmäßigen Maßnahme können die jeweiligen Referenzmarken 19, 19', 19" steuerungstechnische Zusatzfunktionen bewirken, wie zum Beispiel eine Modusumschaltung vornehmen, eine Achssperrfunktion durchführen, und dergleichen. Dadurch kann in einfacher Art und Weise anstelle von aufwändigen Bedienmenüs oder Funktionstasten die Bedienung wesentlich erleichtert und auch fehlersicherer gestaltet werden.

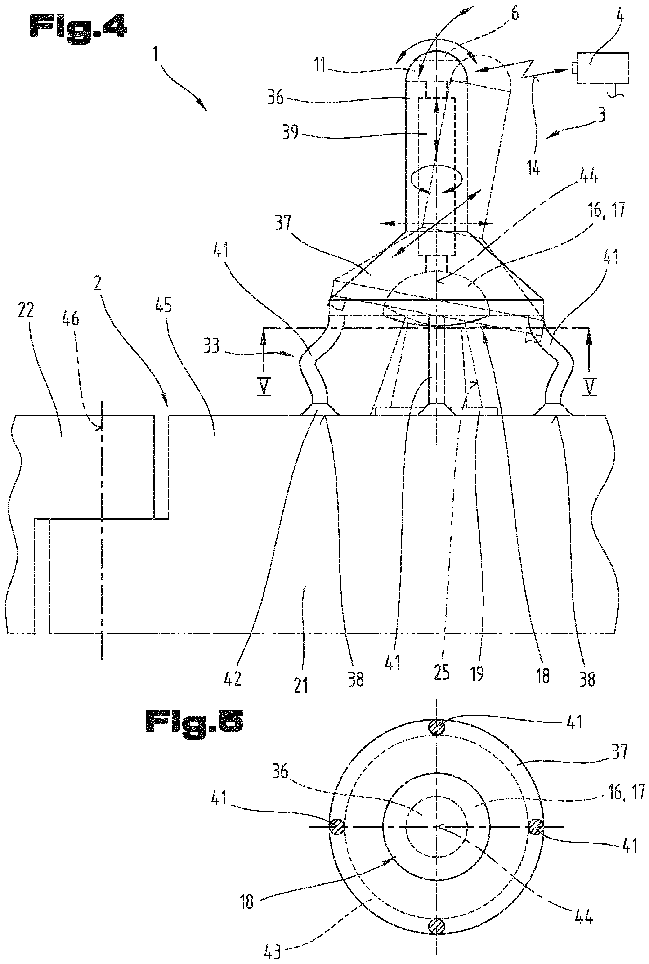

In den Fig. 4, 5 ist eine weitere Ausführungsform eines praktikablen Steuerungsverfahrens bzw. eine Teilkomponente des Steuerungssystems 1 zur Implementierung im angegebenen Steuerungssystem 1 veranschaulicht. Insbesondere ist in den Fig. 4, 5 eine zweckmäßige Ausgestaltung eines durch eine Bedienperson händisch zu führenden bzw. zu verstellenden Bewegungsvorgabemittels 3 schematisiert veranschaulicht, welches Bewegungsvorgabemittel 3 als Teilkomponente zur Umsetzung des angegebenen Steuerungsverfahrens und Steuerungssystems 1 vorteilhaft eingesetzt bzw. implementiert werden kann.

Das entsprechende Bewegungsvorgabemittel 3 umfasst ein Kontaktierungs- und Beabstandungselement 33, welches durch zumindest zwei, insbesondere durch drei oder vier, elastisch nachgiebige Abstützelemente 41 gebildet ist. Darstellungsgemäß sind diese Abstützelemente 41 fußförmig bzw. säulenartig ausgeführt, wobei diese Abstützelemente 41 eine elastisch nachgiebige Beweglichkeit bzw. eine federelastisch rückstellende Verstellbarkeit aufweisen. Beispielsgemäß können diese Abstützelemente 41 durch einen elastomeren Kunststoff mit falten- bzw. filmscharnierartigen Formgebungen oder durch wenigstens ein Kniegelenk definiert sein. Ebenso können die Abstützelemente 41 in Form von Schrauben- oder Blattfedern ausgebildet sein Wesentlich ist, dass die jeweiligen Abstützelemente 41 insgesamt ein elastisch nachgiebiges bzw. federelastisch rückstellendes Kontaktierungs- und Beabstandungselement 33 für das Bewegungsvorgabemittel 3 in Bezug auf eine Oberfläche des zu bewegenden Gelenkarms 21, 22, 23 definieren. Beispielsgemäß weisen die jeweiligen Abstützelemente 41 bogenförmige Ausbuchtungen bzw. scharnierähnliche Gelenksabschnitte auf, welche eine Relativverstellung des Bewegungsvorgabemittels 3, insbesondere von dessen zumindest einen Sensor 16, 17 gegenüber der fest am jeweiligen Gelenkarm 21, 22, 23 bewegten Referenzmarke 19, 19', 19" ermöglichen.

Die entsprechenden Abstützarme bzw. Abstützelemente 41 können aus einem elastomeren, gegenüber der Oberfläche des Industrieroboters 2 reibungserhöhenden Werkstoffen gebildet sein. Die jeweiligen Abstützelemente 41 können dabei auch Kontaktfüße 42 aufweisen, welche eine möglichst rutschsichere, mechanische Kontaktierung des Bewegungsvorgabemittels 3 am Industrieroboter 2 bzw. an der jeweils gewünschten Position der Gelenksarme 21, 22, 23 ermöglichen. Entsprechend einer Ausgestaltungsform können diese Kontaktfüße 42 auch durch Saugnäpfe definiert sein, welche einerseits eine besonders rutschsichere Abstützung, andererseits aber auch eine einfach lösbare und erneut aktivierbare Kopplung zwischen dem Bewegungsvorgabemittel 3 und dem jeweiligen Gelenkarm 21, 22, 23 bewerkstelligen können. Zweckmäßig ist es dabei, wenn das Bewegungsvorgabemittel 3 zumindest annähernd achszentral bzw. zentrisch zur jeweiligen Referenzmarke 19, 19', 19" positioniert wird. Eine absolut achsfluchtende Zentrierung bzw. Ausrichtung des Bewegungsvorgabemittels 3 gegenüber einzulesenden bzw. zu referenzierenden Referenzmarke 19, 19', 19" ist dabei jedoch nicht erforderlich.

Anstelle der Ausbildung von zumindest zwei fußartigen Abstützelementen 41 ist es alternativ auch möglich, einen ring- oder rohrförmigen, elastisch nachgiebigen Abstützkörper 43 vorzusehen, wie dies in Fig. 5 mit strichlierten Linien schematisch angedeutet wurde. Mittels einem derartigen Abstützkörper 43 ist die Sensorik im Bewegungsvorgabemittel 3 ebenso in abgestützter Art und Weise in bestimmter Relativposition gegenüber der einzulesenden bzw. zu erfassenden Referenzmarke 19, 19', 19" positioniert und grundsätzlich weitgehendst zitterfrei abgestützt. Ein solcher ring- bzw. rohrförmiger Abstützkörper 43 kann zur Erzielung der ausreichend elastischen Nachgiebigkeit in seinem Mantelabschnitt definierte Schwächungsbereiche, Durchbrüche und/oder Dehn- bzw. Stauchfalten umfassen, welche eine räumliche Relativverstellung des zumindest einen Sensors 16, 17 des Bewegungsvorgabemittels 3 relativ zur jeweiligen Referenzmarke 19, 19', 19" am jeweiligen Gelenkarm 21, 22, 23 ermöglichen. Zweckmäßig ist es auch, wenn dieser ring- bzw. rohrförmige und in einer Mehrzahl von Raumrichtungen verstellbare Abstützkörper 43 die zu detektierende Referenzmarke 19, 19', 19" umgibt oder zumindest teilweise umgrenzt, wenn das Bewegungsvorgabemittel 3 für steuerungstechnische Zwecke am jeweils ausgewählten Gelenkarm 21, 22, 23 aufgesetzt bzw. angedockt ist. Auch ein solcher ring- oder rohrförmiger Abstützkörper 43 kann vorzugsweise an seiner Kontaktierungsfläche 38 eine reibungserhöhende Haftwirkung bzw. Reibungswirkung gegenüber den typischerweise metallischen Oberflächen des Industrieroboters 2 bzw. seiner Gelenkarme 21, 22, 23 aufweisen.

Via die zumindest zwei elastisch nachgiebigen Abstützelemente 41 bzw. via den zumindest einen ring- oder rohrförmigen Abstützkörper 43 ist der wenigstens eine abstandssensitive oder bildgebende Sensor 16, 17 des Bewegungsvorgabemittels 3 in Folge der Aufbringung einer Stellkraft von Seiten der Bedienperson in unterschiedliche Relativpositionen gegenüber der am jeweiligen Gelenkarm 21, 22, 23 befestigten Referenzmarkierung 19, 19', 19" verbringbar. Diese Relativverstellungen sind dabei derart, dass vorzugsweise in jeder der einnehmbaren Relativverstellungspositionen zumindest ein Teilabschnitt der zu erfassenden Referenzmarke 19, 19', 19" vom Sensor 16 bzw. 17 erfassbar ist bzw. detektierbar bleibt. In Fig. 4 ist eine rotatorisch ausgelenkte Verstellposition des Bewegungsvorgabemittels 3 in strichlierten Linien angedeutet worden. Zusätzlich oder in Kombination zu solchen rotatorischen bzw. kippenden Verstellbewegungen des Bewegungsvorgabemittels 3 relativ zu der zu detektierenden Referenzmarke 19 ist es auch möglich, dass das Bewegungsvorgabemittel 3 translatorische Relativverstellungen ausführt bzw. von der Bedienperson ausführbar sind. Insbesondere ist es denkbar, dass das Bewegungsvorgabemittel 3 rotatorische Verstellbewegungen um dessen Längsmittelachse 44 und/oder axiale Verstellbewegungen in Bezug auf dessen Längsmittelachse 44 und/oder radiale Verstellbewegungen in Bezug auf dessen Längsmittelachse 44 und/oder Kippbewegungen in Bezug auf dessen Längsmittelachse 44 ermöglicht, wie dies in Fig. 4 mit den diversen Doppelpfeilen angedeutet wurde. Insbesondere kann durch Aufbringen entsprechend gerichteter Betätigungs- bzw. Verstellkräfte von Seiten der Bedienperson gegenüber dem Bewegungsvorgabemittel 3, beispielsweise gegenüber dessen Griffabschnitt 36, eine entsprechende Relativverstellung in Bezug auf die jeweilige Referenzmarke 19, 19', 19", welche ortsfest am jeweiligen Gelenkarm 21, 22, 23 angebracht sind, erzielt bzw. bewirkt werden. Für die Umsetzung der Relativerstellbarkeit des Bewegungsvorgabemittels 3 bzw. von dessen Sensor 16, 17 gegenüber der jeweils selektierten Referenzmarke 19, 19', 19" mittels den Abstützelementen 41 bzw. mittels dem Abstützkörper 43 sind eine Mehrzahl von mechanischen Ausführungen denkbar.

Wesentlich ist, dass der zumindest eine Sensor 16, 17 des Bewegungsvorgabemittels 3 die jeweiligen Relativverschiebungen bzw. Relativverstellungen gegenüber der zu detektierenden Referenzmarke 19, 19', 19" erfassen kann. Derartige Relativverstellungen sind vorzugsweise über einen optischen bzw. bildgebenden Sensor 16 in optimierter bzw. zweckmäßiger Art und Weise erfassbar. Insbesondere dann, wenn die Referenzmarke 19, 19', 19" eine optisch erfassbare Kennung bzw. Referenzmarke ist, wie zum Beispiel ein grafisches Muster in Art eines QR-Codes oder dergleichen, können Relativverstellungen bzw. Stellwege in einfacher Art und Weise erfasst und sodann in entsprechende Stellbewegungen bzw. Steuerkommandos für den Industrieroboter 2 umgesetzt werden. Die entsprechenden Umsetzungen der sensorischen Werte des Bewegungsvorgabemittels 3 in entsprechende Stellbewegungen des Industrieroboters 2 werden zweckmäßigerweise via die Steuervorrichtung 4, 4' vorgenommen. Zweckmäßig ist es, die Konstruktion des Bewegungsvorgabemittels 3 derart zu wählen, dass in allen plangemäß vorgesehenen Stellpositionen bzw. Relativstellungen gegenüber der Referenzmarke zumindest noch Teilabschnitte der jeweiligen Referenzmarke 19, 19', 19" von dem zumindest einen Sensor 16, 17 erfass- bzw. detektierbar sind. Damit ist gewährleistet, dass die rotatorischen und/oder linearen Relativverschiebungen von dem zumindest einen bildgebenden oder abstandssensitiven Sensors 16, 17 detektiert werden können und von der Steuervorrichtung 4, 4' - Fig. 1, 2 - in korrespondierende Stellbewegungen des jeweils direkt kontaktierten und damit ausgewählten Gelenkarms 21, 22, 23 umgesetzt werden, oder alternativ in korrespondierende Stellbewegungen durch mehrere der Gelenkarme 21, 22, 23 umgesetzt werden, sofern für die jeweils erforderliche bzw. gewünschte Stellbewegung des Industrieroboters 2 mehrere Gelenkarme 21, 22, 23 verstellt bzw. typischerweise elektromotorisch angetrieben werden müssen.

Die Elastizität der fußartigen Abstützelemente 41 bzw. des hohlprofilartigen Abstützkörpers 43 ist bevorzugt derart gewählt, dass das Bewegungsvorgabemittel 3 nach Wegfall der Betätigungs- bzw. Stellkräfte von Seiten der Bedienperson wieder in seine ursprüngliche Ausgangs- bzw. Ruheposition zurückkehrt, insbesondere achsfluchtend oder zumindest annähernd zentrisch zur jeweils zugeordneten Referenzmarke 19, 19', 19" ausgerichtet wird. Entsprechend einer zweckmäßigen Ausgestaltung kann der ring- oder rohrförmige Abstützkörper 43 in Art eines Wellrohres mit einer Vielzahl von Sicken bzw. Bewegungsrippen gebildet sein, welche an der Mantelfläche des Abstützkörpers 43 in Umfangsrichtung der Mantelfläche verlaufen.

Die Positionsdaten, welche von dem zumindest einen Sensor 16, 17 des Bewegungsvorgabemittels 3 in Bezug auf die Referenzmarke 19, 19', 19" aufgenommen werden, werden gegebenenfalls innerhalb des Bewegungsvorgabemittels 3 aufbereitet und via die wenigstens eine Datenschnittstelle 11, welche wie vorhergehend bereits ausgeführt, kabelgebunden oder drahtlos ausgeführt sein kann, an die Steuervorrichtung 4, 4' übermittelt und von dieser in entsprechende Stellkommandos bzw. Verfahrbewegungen für den Industrieroboter 2 bzw. den jeweiligen Gelenkarm 21, 22, 23 umgesetzt.

Wie in Fig. 4 schematisch dargestellt, weist ein Gelenkarm 21, 22, 23 eines Industrieroboters 2 eine mechanische Tragstruktur 45, insbesondere zumindest einen mechanischen Arm auf. Beispielsgemäß ist der Gelenkarm 21 via zumindest eine Drehachse 46 gegenüber dem benachbarten Gelenkarm 22 oder gegenüber einer sonstigen mechanischen Komponente des Industrieroboters 2 winkelverstellbar gelagert. Zur Aktivierung und Deaktivierung dieser Drehachse 46 sind im bzw. am Industrieroboter 2 - wie an sich bekannt - Stellmotoren oder sonstige Antriebselemente, wie zum Beispiel hydraulische Stellzylinder, vorgesehen. Die Tragstruktur 45 eines Gelenkarms 21, 22, 23 ist typischerweise metallisch ausgeführt, kann jedoch auch aus Kunststoff gebildet sein, wobei die jeweilige Oberfläche der Tragstruktur 45 gegebenenfalls reibungserhöhende Abschnitte aufweist, um eine möglichst rutschsichere Abstützung des Bewegungsvorgabemittels 3 bzw. von dessen Kontaktierungs- und Beabstandungselement 33 zu erzielen.

Im einfachsten Fall sind die Referenzmarken 19, 19', 19" durch Aufkleber mit aufgedruckten Kennzeichnungen bzw. Codes oder Strukturen gebildet. Dadurch kann in einfacher Art und Weise eine Wegmessung bzw. eine Feststellung der Relativposition zwischen der ausgewählten Referenzmarke 19, 19', 19" und dem Bewegungsvorgabemittel 3 erzielt werden und auch die zeitliche Veränderung der Relativposition ermittelt werden. Alternativ ist es auch möglich, die Referenzmarken 19, 19', 19" durch geometrische Strukturen bzw. Erhebungen bzw. Vertiefungen zu definieren und auf diese Weise die unterschiedlichen Relativpositionen zwischen Bewegungsvorgabemittel 3 und Referenzmarke 19, 19', 19" detektieren zu können. Aber auch die Verwendung von RFID-Tags ist denkbar, um Relativpositionen erfassen bzw. die Veränderung von Relativpositionen detektieren zu können.

Eine vorteilhafte Eigenschaft des angegebenen Bewegungsvorgabemittels 3 liegt darin, dass dieses eine einfache Auswahl jener Gelenkarme 21, 22, 23 ermöglicht, welche von der Bedienperson in ihrer Lage bzw. Orientierung, das heißt in ihrer Pose, verändert werden sollen. Durch einfaches Andocken bzw. Abstützen des Bewegungsvorgabemittels 3 und durch entsprechendes Einlesen der jeweiligen Referenzmarke 19, 19', 19" kann sodann in besonders einfacher, rascher und intuitiver Weise ein Verstellvorgang des jeweils involvierten Gelenkarmes 21, 22, 23 bzw. einer Mehrzahl von für die gewünschte Verstellbewegung benötigter Gelenkarme 21, 22, 23 vorgenommen werden, indem das Bewegungsvorgabemittel 3 einfach in die gewünschte Richtung verstellt bzw. bewegt wird.

Beispielsweise ist es denkbar, dass durch eine Drehung des Bewegungsvorgabemittels 3 um dessen Längsmittelachse 44 der Bewegungsantrieb des Gelenkarmes 21 aktiviert wird und sodann eine Winkelverstellung bezogen auf die Drehachse 46 eingeleitet wird. Durch die besonders einfache und praktikable Auswahlmöglichkeit des jeweiligen Gelenkarmes 21, 22, 23 mittels der an den Gelenkarmen 21, 22, 23 jeweils angebrachten Referenzmarken 19, 19', 19" kann der Industrieroboter 2 sehr einfach und intuitiv verstellt werden, ohne dass die Bedienung von komplexen Eingabemitteln, wie zum Beispiel einer sogenannten 6D-Maus, einer Vielzahl von Verfahrtasten, oder dergleichen erforderlich wäre. Die mechanische Abstützung bzw. der direkte Kontakt zwischen dem Bewegungsvorgabemittel 3 und dem jeweils ausgewählten Gelenkarm 21, 22, 23, welcher die jeweilige Referenzmarke 21, 22, 23 trägt, begünstigt dabei das Bedien- bzw. Steuerverhalten erheblich.

Es wird ausdrücklich darauf hingewiesen, dass alternativ oder in Kombination zur vorhergehend beschriebenen Anbringung der Referenzmarken 19, 19', 19" an zumindest einzelnen der Gelenkarme 21, 22, 23 des Industrieroboters 2, eine Anbringung von zumindest einer Referenzmarke 19, 19', 19" an einem Werkstück, welches vom Industrieroboter 2 zu bewegen bzw. zu handhaben ist, ebenso möglich ist. So ist es auch möglich, dass zumindest eines der zu manipulierenden Werkstücke eine solche Referenzmarke 19, 19', 19" trägt und das Bewegungsvorgabemittel 3 somit auf die jeweilige Referenzmarke 19, 19', 19" am Werkstück Bezug nimmt, sodass quasi das Werkstück wunsch- bzw. bedarfsgemäß im Raum bewegt werden kann. Nachdem ein entsprechender Teach- bzw. Programmiervorgang mit einem exemplarischen Werkstück und zumindest einer entsprechenden Referenzmarkierung 19, 19', 19" vorgenommen wurde, kann der Industrieroboter 2 die entsprechend programmierten Bewegungsabläufe automatisch in zahlreichen Wiederholungszyklen mit weiteren, gleichartigen Werkstücken ausführen. Ein alternatives Einsatzszenario sind beispielsweise Roboter-unterstützte Fertigungs- und Fügeprozesse, etwa beim Zusammenbau von Fahrzeugen, wobei die Fügeprozesse eine Führung der jeweiligen Komponenten durch eine Bedienperson unter visueller Kontrolle umfassen, die Komponenten jedoch gleichzeitig von einem Montageroboter gehalten und bewegt werden, um deren Gewicht zu tragen und für die Person eine kräftesparende Handhabung der Teile zu ermöglichen.

Die vorhergehend beschriebenen Maßnahmen bzw. Verfahrensweisen sind im Steuerungssystem 1 bzw. im Bewegungsvorgabemittel 3 abgebildet bzw. mittels dieser Vorrichtungen ausführbar. Insbesondere sind die Funktionen und die Verhaltensweisen des Steuerungssystems 1 bzw. des Bewegungsvorgabemittels 3 zum Großteil durch softwaregesteuerte, elektronische Komponenten bestimmt. Die entsprechende Umsetzung der erfindungsgemäßen Maßnahmen durch softwaretechnische Mittel ist dem Fachmann geläufig und kann unter Beiziehung von standardmäßig verfügbaren elektronischen Komponenten in Verbindung mit üblichen Ein- und Ausgabemitteln erfolgen.

Der Ordnung halber sei abschließend darauf hingewiesen, dass zum besseren Verständnis des angegebenen Steuerungsverfahrens bzw. des Aufbaus des Steuerungssystems 1 und des Bewegungsvorgabemittels 3 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen, in Zusammenhang mit den Fig. 1-5 beschriebenen Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Steuerungssystem | 36 | Griffabschnitt |
| 2 | Industrieroboter | 37 | Sensorkopf |
| 3 | Bewegungsvorgabemittel | 38 | Kontaktierungsfläche |
| 4, 4' | Steuervorrichtung | 39 | Auswertungsvorrichtung |
| 5 | Handterminal | 40 | Lichtquelle |
| | | | |
| 6 | Sicherheitsschalteinrichtung | | |
| 7 | Display | 41 | Abstützelement |
| 8 | Bedienelement | 42 | Kontaktfuß |
| 9 | Sensorik | 43 | Abstützkörper |
| 10 | Sensorik | 44 | Längsmittelachse |
| | | 45 | Tragstruktur |
| 11 | Datenschnittstelle | | |
| 12 | Datenschnittstelle | 46 | Drehachse |
| 13 | Datenverbindung | | |
| 14 | Datenverbindung | | |
| 15 | Datenverbindung | | |
| 16 | bildgebender Sensor | | |
| 17 | abstandssensitiver Sensor | | |
| 18 | Kameraeinheit | | |
| 19, 19', 19" | Referenzmarke | | |
| 20 | Tetraeder | | |
| | | | |
| 21 | Gelenkarm | | |
| 22 | Gelenkarm | | |
| 23 | Gelenkarm | | |
| 24 | Endeffektor | | |
| 25 | Koppelbedingung | | |
| | | | |
| 26 | starre Verbindung | | |
| 27 | gelenkige Verbindung | | |
| 28 | Länge | | |
| 29 | Distanz | | |
| 30 | Kamera | | |
| | | | |
| 31 | Kamera | | |
| 32 | Kamera | | |
| 33 | Kontaktierungs- und Beabstandungselement | | |
| 34 | Kopplungsstange | | |
| 35 | Pufferelement | | |

## Patentansprüche

1. Verfahren zum Steuern der Bewegungen von Gelenkarmen (21, 22, 23) eines Industrieroboters (2), mit einem durch eine Bedienperson händisch zu führenden Bewegungsvorgabemittel (3), dessen Bewegungen zur Generierung von wenigstens einem Teil von Bewegungssteuerdaten für den zu steuernden Industrieroboter (2) vorgesehen sind, wobei das Bewegungsvorgabemittel (3) mit wenigstens einer stationären Steuervorrichtung (4, 4') datentechnisch gekoppelt ist und die wenigstens eine Steuervorrichtung (4, 4') zumindest zur Aktivierung und Deaktivierung von Bewegungsantrieben des Industrieroboters (2) ausgebildet ist, **dadurch gekennzeichnet, dass** zumindest an einzelnen von der Bedienperson gesteuert verstellbaren Gelenkarmen (21, 22, 23) wenigstens eine von mehreren Referenzmarken (19, 19', 19") angeordnet oder ausgebildet ist, und dass das Bewegungsvorgabemittel (3) zumindest einen bildgebenden und/oder zumindest einen abstandssensitiven Sensor (16, 17) aufweist, welcher zumindest eine Sensor (16, 17) des Bewegungsvorgabemittels (3) mit wenigstens einer der mehreren Referenzmarken (19, 19', 19") in eine von der Bedienperson ausgewählte räumliche Relativposition versetzbar ist, wobei in einem initialen Schritt unter Verwendung bildbasierender und/oder abstandsbasierender Daten aus der relativen Lage zwischen dem Bewegungsvorgabemittel (3) und der jeweils selektierten Referenzmarke (19, 19', 19") eine starre Koppelbedingung (25), oder eine um bestimmte Freiheitsgrade gelenkige Koppelbedingung (25) definiert bzw. festgelegt wird, und dass in einem nachfolgenden Schritt während einer Bewegung des Bewegungsvorgabemittels (3) zumindest der die jeweils selektierte Referenzmarke (19, 19', 19") tragende Gelenkarm (21, 22, 23) den Bewegungen des Bewegungsvorgabemittel (3) steuerungstechnisch derart nachgeführt wird, dass im Rahmen der technischen Grenzen des Industrieroboters (2) oder des zumindest einen Gelenkarms (21, 22, 23) die im ersten Schritt festgelegte Koppelbedingung (25) zumindest annähernd eingehalten wird.

2. Verfahren nach Anspruch 1, **dadurch gekennzeichnet, dass** die steuerungstechnische Nachführung des die jeweils selektierte Referenzmarke (19, 19', 19") tragenden Gelenkarms (21, 22, 23) unter Verwendung bildbasierender oder abstandsbasierender Daten des zumindest einen bildgebenden oder abstandsensitiven Sensors (16, 17) und/oder von Daten von einer im Bewegungsvorgabemittel (3) integrierten Sensorik (9) und/oder von Daten einer externen Sensorik (10) erfolgt, indem aus diesen Daten die räumliche Lage oder Orientierung oder die Veränderung der räumlichen Lage oder Orientierung des Bewegungsvorgabemittels (3) errechnet wird.

3. Verfahren nach Anspruch 1 oder 2, **dadurch gekennzeichnet, dass** die im initialen Schritt festgelegte Koppelbedingung (25) eine starre Verbindung (26) zwischen dem Bewegungsvorgabemittel (3) und dem die selektierte Referenzmarke (19, 19', 19") tragenden Gelenkarm (21, 22, 23) beschreibt.

4. Verfahren nach Anspruch 1 oder 2, **dadurch gekennzeichnet, dass** die im initialen Schritt festgelegte Koppelbedingung (25) eine um zumindest eine Achse gelenkige Verbindung (27) beschreibt, wobei das virtuelle Gelenk eine konstante Relativposition zum Bewegungsvorgabemittel (3) sowie eine konstante Relativposition zu dem die selektierte Referenzmarke (19, 19', 19") tragenden Gelenkarm (21, 22, 23) aufweist.

5. Verfahren nach einem der vorhergehenden Ansprüche, **dadurch gekennzeichnet, dass** für jene Freiheitsgrade der Roboterbewegung, welche nicht bereits durch die Koppelbedingung (25) und die Bewegung des Bewegungsvorgabemittels (3) festgelegt sind, zusätzliche Nebenbedingungen automatisch oder durch eine Benutzereingabe festlegbar sind.

6. Verfahren nach Anspruch 5, **dadurch gekennzeichnet, dass** als Nebenbedingung festgelegt ist, dass während der Nachführung die Orientierung eines via die Referenzmarken (19, 19', 19") ausgewählten, beweglichen Gelenkarms (21, 22, 23) im Raum beibehalten wird, oder dass die Position eines mit einem beweglichen Gelenkarm (21, 22, 23) verknüpften Punktes im Raum unveränderlich beibehalten wird, oder dass sowohl Lage als auch Orientierung eines beweglichen Gelenkarms (21, 22, 23) konstant gehalten wird.

7. Verfahren nach einem der vorhergehenden Ansprüche, **dadurch gekennzeichnet, dass** die Nachführung eines ausgewählten, beweglichen Gelenkarms (21, 22, 23) nur während oder nach einem Freigabebefehl durch die Bedienperson erfolgt, insbesondere nur während der Betätigung eines Bewegungskopplungs-Befehlstasters oder einer Sicherheitsschalteinrichtung (6) in der Art einer Freigabe- oder Zustimmtaste.

8. Verfahren nach einem der vorhergehenden Ansprüche, **dadurch gekennzeichnet, dass** eine Mehrzahl von jeweils unterscheidbar kodierten Referenzmarken (19, 19', 19") an verschiedenen Positionen an einem beweglichen Gelenkarm (21, 22, 23) oder an mehreren beweglichen Gelenkarmen (21, 22, 23) vorgesehen ist, dass der bildgebende oder abstandssensitive Sensor (16, 17) die Kodierung oder Eigenart einer solchen Referenzmarke (19, 19', 19") erfassen kann, und dass eine von der Bedienperson ausgewählte und mit dem Bewegungsvorgabemittel (3) erfasste oder eingelesene Referenzmarke (19, 19', 19") für die Festlegung der Koppelbedingung (25) herangezogen wird oder mitbestimmend ist, indem die Bedienperson das Bewegungsvorgabemittel (3) derart positioniert, dass die jeweilige Referenzmarke (19, 19', 19") im Erfassungsbereich des bildgebenden oder abstandssensitiven Sensors (16, 17) liegt und der bildgebende oder abstandssensitive Sensor (16, 17) die Kodierung oder Eigenart der gewünschten oder entsprechend ausgewählten Referenzmarke (19, 19', 19") signaltechnisch erfasst.

9. Verfahren nach Anspruch 8, **dadurch gekennzeichnet, dass** mit der Kodierung einer Referenzmarke (19, 19', 19") Eigenschaften und Informationen datentechnisch verknüpft sind, oder dass die jeweilige Kodierung die entsprechenden Daten enthält, insbesondere betreffend eine Befestigungsposition der jeweiligen Referenzmarke (19, 19', 19") am Industrieroboter oder in Bezug auf dessen Gelenkarme (21, 22, 23), oder betreffend der Position an einem vom Industrieroboter (2) gehaltenen Werkstück, oder betreffend einen beschreibenden Namen der jeweiligen Referenzmarke (19, 19', 19"), oder betreffend eine Kennung oder Bezeichnung des jeweiligen die Referenzmarke (19, 19', 19") tragenden Gelenkarms (21, 22, 23), oder betreffend zusätzlicher Bedingungen zur Festlegung von nicht durch die Koppelbedingung (25) festgelegten Freiheitsgraden für die Nachführbewegung des Industrieroboters (2).

10. Verfahren nach einem der vorhergehenden Ansprüche, **dadurch gekennzeichnet, dass** der Bedienperson über ein Ausgabemittel des Bewegungsvorgabemittels (3) signalisiert wird, wenn der bildgebende oder abstandssensitive Sensor (16, 17) eine Referenzmarke (19, 19', 19") tatsächlich erfassen kann oder wenn eine solche Referenzmarke (19, 19', 19") in dessen Erfassungsbereich liegt, oder dass der Bedienperson über ein Ausgabemittel des Bewegungsvorgabemittels (3) signalisiert wird, wenn der bildgebende oder abstandssensitive Sensor (16, 17) eine der Referenzmarken (19, 19', 19") erfolgreich erfasst hat.

11. Verfahren nach einem der vorhergehenden Ansprüche, **dadurch gekennzeichnet, dass** der Bedienperson über ein Ausgabemittel des Bewegungsvorgabemittels (3) zumindest Teile der mit einer erfassten Referenzmarke (19, 19', 19") datentechnisch verknüpften Eigenschaften und Informationen ausgegeben werden, oder zumindest Teile der von einer erfassten Referenzmarke (19, 19', 19") ausgelesenen Eigenschaften und Informationen ausgegeben werden.

12. Verfahren nach einem der vorhergehenden Ansprüche, **dadurch gekennzeichnet, dass** die Festlegung der Koppelbedingung (25) im initialen Schritt durch Verbringen des Bewegungsvorgabemittels (3) durch eine Bedienperson in eine von ihr gewünschte Relativposition zur Referenzmarke (19, 19', 19") und durch eine anschließende Festlegung oder Aktivierung der Koppelbedingung (25) über ein Eingabe- oder Betätigungsmittel am Bewegungsvorgabemittel (3) erfolgt.

13. Verfahren nach Anspruch 12, **dadurch gekennzeichnet, dass** die Relativposition, aus der die Koppelbedingung (25) festgelegt wird, durch eine definiert begrenzte Distanz zwischen der jeweiligen Referenzmarke (19, 19', 19") und dem Bewegungsvorgabemittel (3) technisch definiert begrenzt ist, oder durch eine Richtungsvorgabe innerhalb eines bestimmten Raumsegments in Bezug auf die jeweilige Referenzmarke (19, 19', 19") und/oder in Bezug auf das Bewegungsvorgabemittel (3) definiert ist.

14. Verfahren nach Anspruch 13, **dadurch gekennzeichnet, dass** der Bedienperson über ein Ausgabemittel am Bewegungsvorgabemittel (3) signalisiert wird, ob für die eingenommene Relativposition eine Koppelbedingung (25) zulässig ist beziehungsweise festgelegt werden kann.

15. Verfahren nach einem der vorhergehenden Ansprüche, **dadurch gekennzeichnet, dass** der zumindest eine bildgebende Sensor (16) am Bewegungsvorgabemittel (3) durch eine Kameraeinheit (18) gebildet ist, mit welcher Bilddaten von der jeweils ausgewählten und anvisierten Referenzmarke (19, 19', 19") erzeugt werden.

16. Verfahren nach einem der vorhergehenden Ansprüche, **dadurch gekennzeichnet, dass** der zumindest eine abstandssensitive Sensor (17) durch einen Kurzstrecken-Abstandssensor in Art eines Ultraschallsensors, Lichtreflexionssensors, Magnetfeldsensors oder RFID-Sensors gebildet ist, wobei ein solcher abstandssensitiver Sensor (17) zumindest drei voneinander beabstandete Einzelsensoren aufweist, welche zur gemeinsamen Erfassung einer ausgewählten Referenzmarke (19, 19', 19") vorgesehen sind.

17. Verfahren nach einem der vorhergehenden Ansprüche, **dadurch gekennzeichnet, dass** die Referenzmarken (19, 19', 19") oder wenigstens eine von mehrfach angeordneten Referenzmarken (19, 19', 19") durch eine 2D-Markierung in Art eines Barcodes, eines Symbols oder einer Grafik gebildet sind.

18. Verfahren nach einem der vorhergehenden Ansprüche, **dadurch gekennzeichnet, dass** die Referenzmarken (19, 19', 19") oder wenigstens eine von mehrfach angeordneten Referenzmarken (19, 19', 19") durch eine 3D-Markierung in Art eines Quaders, eines Tetraeders (20), oder in Art von kartesischen Zeigerachsen an dem gesteuert zu bewegenden Industrieroboter (2) gebildet sind.

19. Verfahren nach einem der vorhergehenden Ansprüche, **dadurch gekennzeichnet, dass** das Bewegungsvorgabemittel (3) stabförmig ausgebildet ist und eine Länge (28) zwischen 10 cm und 100 cm aufweist, wobei der zumindest eine bildgebende Sensor (16) oder der zumindest eine abstandssensitive Sensor (17) an einem von einem Griffabschnitt (36) des Bewegungsvorgabemittels (3) abgewandten Ende des Bewegungsvorgabemittels (3) angeordnet ist.

20. Verfahren nach einem der vorhergehenden Ansprüche, **dadurch gekennzeichnet, dass** das Bewegungsvorgabemittel (3) zur berührungslosen, distanzbehafteten Bewegungskopplung gegenüber dem Industrieroboter (2) oder dessen Gelenkarmen (21, 22, 23) ausgebildet ist, wobei eine Distanz (29) zwischen dem Bewegungsvorgabemittel (3) und dem Industrieroboter (2) oder dem jeweiligen Gelenkarm (21, 22, 23) einen Distanzwert ausgewählt aus einem Bereich zwischen 20 cm und 200 cm aufweist.

21. Verfahren nach einem der vorhergehenden Ansprüche, **dadurch gekennzeichnet, dass** die Koppelbedingung (25) als eine elastisch nachgiebige, mechanische Verbindung (26, 27) rechnerisch modelliert wird, und/oder dass für zumindest einen eine Referenzmarke (19, 19', 19") tragenden Gelenkarm (21, 22, 23) ein Einfluss einer Massenträgheit und/oder Reibungskraft in Bezug auf die nachfolgend ausgeführte Bewegung rechnerisch modelliert wird.

22. Verfahren nach einem der vorhergehenden Ansprüche, **dadurch gekennzeichnet, dass** das Bewegungsvorgabemittel (3) zumindest ein Kontaktierungs- und Beabstandungselement (33) aufweist, welches Kontaktierungs- und Beabstandungselement (33) einen von der Bedienperson ausgewählten Gelenkarm (21, 22, 23) während der Bewegung des Industrieroboters (2) oder des ausgewählten Gelenkarms (21, 22, 23) und bei steuerungstechnisch eingehaltener Koppelbedingung (25) im Nahbereich seiner Referenzmarke (19, 19' 19") kontaktiert, oder alternativ der ausgewählte Gelenkarm (21, 22, 23) an einer geeigneten Position an seiner Oberfläche kontaktiert wird, und dabei eine reib- oder formschlüssige Kraftübertragung oder eine lastübertragende Abstützung zwischen dem Bewegungsvorgabemittel (3) und dem zumindest einen von der Steuervorrichtung (4, 4') angesteuerten und bewegten Gelenkarm (21, 22, 23) bewirkt, sodass der Bedienperson ein haptisches Feedback in Bezug auf die ausgeführte Roboterbewegung vermittelt wird.

23. Verfahren nach einem der vorhergehenden Ansprüche, **dadurch gekennzeichnet, dass** das Kontaktierungs- und Beabstandungselement (33) am Bewegungsvorgabemittel (3) durch zumindest zwei, insbesondere durch drei oder vier elastisch nachgiebige Abstützelemente (41), oder durch einen ring- oder rohrförmigen, elastisch nachgiebigen Abstützkörper (43) gebildet ist, über welche Abstützelemente (41) oder über welchen Abstützkörper (43) der wenigstens eine abstandssensitive oder bildgebende Sensor (16, 17) durch Aufbringen einer Stellkraft von Seiten der Bedienperson gegenüber dem Bewegungsvorgabemittel (3) in unterschiedliche Relativpositionen gegenüber der am jeweiligen Gelenkarm (21, 22, 23) befestigten Referenzmarkierung (19, 19', 19") verbringbar ist, wobei rotatorische und/oder lineare Relativverstellungen von dem zumindest einen bildgebenden oder abstandssensitiven Sensor (16, 17) detektiert werden und von der Steuervorrichtung (4, 4') in korrespondierende Stellbewegungen des jeweils mechanisch kontaktierten und entsprechend ausgewählten Gelenkarms (21, 22, 23) umgesetzt werden, oder in korrespondierende Stellbewegungen durch mehrere der Gelenkarme (21, 22, 23) umgesetzt werden.

24. Bewegungsvorgabemittel (3) zum Steuern der Bewegungen von Gelenkarmen (21, 22, 23) eines Industrieroboters (2),
wobei das Bewegungsvorgabemittel (3) zum händischen Führen durch eine Bedienperson und
zum Generieren von wenigstens einem Teil von Bewegungssteuerdaten für den zu steuernden Industrieroboter (2) ausgebildet ist,
wobei das Bewegungsvorgabemittel (3) dazu ausgebildet ist mit wenigstens einer stationären Steuervorrichtung (4, 4 ') datentechnisch gekoppelt zu sein,
**dadurch gekennzeichnet,**
**dass** das Bewegungsvorgabemittel (3) zumindest einen bildgebenden und/oder zumindest einen abstandssensitiven Sensor (16, 17) aufweist, welcher zumindest eine Sensor (16, 17) des Bewegungsvorgabemittels (3) mit wenigstens einer der mehreren Referenzmarken (19, 19', 19") in eine von der Bedienperson ausgewählte räumliche Relativposition versetzbar ist,
und **dass** das Bewegungsvorgabemittel (3) zum Austragen des Verfahrens nach einem der Ansprüche 1-23 ausgebildet ist.

25. Steuerungssystem (1) zum Steuern der Bewegungen von Gelenkarmen (21, 22, 23) eines Industrieroboters (2),
das Steuerungssystem (1) umfassend einen Industrieroboter (2) mit Gelenkarmen (21, 22, 23), eine stationäre Steuervorrichtung (4, 4') und ein Bewegungsvorgabemittel (3) nach Anspruch 24,
wobei das Bewegungsvorgabemittel (3) mit wenigstens der stationären Steuervorrichtung (4, 4') datentechnisch gekoppelt ist und die wenigstens eine Steuervorrichtung (4, 4') zumindest zur Aktivierung und Deaktivierung von Bewegungsantrieben des Industrieroboters (2) ausgebildet ist,
**dadurch gekennzeichnet,**
**dass** zumindest an einzelnen von der Bedienperson gesteuert verstellbaren Gelenkarmen (21, 22, 23) wenigstens eine von mehreren Referenzmarken (19, 19', 19") angeordnet oder ausgebildet ist,
und **dass** das Steuerungssystem (1) zum Austragen des Verfahrens nach einem der Ansprüche 1-23 ausgebildet ist.

## Claims

1. A method for controlling the movements of articulated arms (21, 22, 23) of an industrial robot (2), comprising a movement setting means (3) to be guided by hand by an operator, the movements of which are provided for generating at least a portion of movement control data for the industrial robot (2) to be controlled, wherein the movement setting means (3) is coupled by data technology to at least one stationary control device (4, 4') and the at least one control device (4, 4') is designed at least for the activation and deactivation of movement drives of the industrial robot (2), **characterized in that** at least one of a plurality of reference marks (19, 19', 19") is arranged or formed at least on individual articulated arms (21, 22, 23) adjustable by the operator in a controlled manner, and that the movement setting means (3) comprises at least one imaging and/or at least one distance-sensitive sensor (16, 17), which at least one sensor (16, 17) of the movement setting means (3) can be set with at least one of the plurality of reference marks (19, 19', 19") into a spatial relative position selected by the operator, wherein in an initial step using image-based and/or distance-based data from the relative position between the movement setting means (3) and the respectively selected reference mark (19, 19', 19"), a fixed coupling condition (25) or an articulated coupling condition (25) with specific degrees of freedom is defined and/or determined, and that in a following step during a movement of the movement setting means (3), at least the articulated arm (21, 22, 23) bearing the respectively selected reference mark (19, 19', 19") tracks the movements of the movement setting means (3) by control technology such that within the technical limits of the industrial robot (2) or of the at least one articulated arm (21, 22, 23), the coupling condition (25) set in the initial step is adhered to at least approximately.

2. The method according to claim 1, **characterized in that** the control technological tracking of the articulated arm (21, 22, 23) bearing the respectively selected reference mark (19, 19', 19") is performed by using image-based or distance-based data of the at least one imaging or distance-sensitive sensor (16, 17) and/or data from a sensor system (9) integrated into the movement setting means (3) and/or data from an external sensor system (10), by the spatial position or orientation or change of the spatial position or orientation of the movement setting means (3) being calculated from said data.

3. The method according to claim 1 or 2, **characterized in that** the coupling condition (25) set in the initial step describes a fixed connection (26) between the movement setting means (3) and the articulated arm (21, 22, 23) bearing the selected reference mark (19, 19', 19").

4. The method according to claim 1 or 2, **characterized in that** the coupling condition (25) set in the initial step describes an articulated connection (27) about at least one axis, wherein the virtual joint has a constant relative position to the movement setting means (3) and a constant relative position to the articulated arm (21, 22, 23) bearing the selected reference mark (19, 19', 19").

5. The method according to one of the preceding claims, **characterized in that** for the degrees of freedom of the robot movement which are not already determined by the coupling condition (25) and the movement of the movement setting means (3), additional secondary conditions can be determined automatically or by means of user input.

6. The method according to claim 5, **characterized in that** a secondary condition is set according to which during the tracking, the orientation of a movable articulated arm (21, 22, 23) selected via the reference marks (19, 19', 19") is maintained in space, or that the position of a point in space linked to a movable articulated arm (21, 22, 23) is maintained unchangeably, or that both the position and orientation of a movable articulated arm (21, 22, 23) is kept constant.

7. The method according to one of the preceding claims, **characterized in that** the tracking of a selected, movable articulated arm (21, 22, 23) is only performed during or after a release command by the operator, in particular only during the actuation of a movement coupling command button or a safety switching device (6) in the form of a release or permissive button.

8. The method according to one of the preceding claims, **characterized in that** a plurality of respectively distinguishably coded reference marks (19, 19', 19") is provided at different positions on a movable articulated arm (21, 22, 23) or on a plurality of movable articulated arms (21, 22, 23), that the imaging or distance-sensitive sensor (16, 17) can detect the coding or specific character of such a reference mark (19, 19', 19"), and that a reference mark (19, 19', 19") selected by the operator and detected or read by the movement setting means (3) is used or is relevant for determining the coupling condition (25) by the operator positioning the movement setting means (3) such that the respective reference mark (19, 19', 19") is in the detection area of the imaging or distance-sensitive sensor (16, 17) and the imaging or distance-sensitive sensor (16, 17) detects the coding or specific character of the desired or suitably selected reference mark (19, 19', 19") by signaling.

9. The method according to claim 8, **characterized in that** properties and information are linked by data technology to the coding of a reference mark (19, 19', 19"), or that the respective coding contains the corresponding data, relating in particular to an attachment position of the respective reference mark (19, 19', 19") on the industrial robot or relating to its articulated arms (21, 22, 23) or relating to the position on a workpiece held by the industrial robot (2) or relating to a descriptive name of the respective reference mark (19, 19', 19") or relating to an identifier or name of the respective articulated arm (21, 22, 23) bearing the reference mark (19, 19', 19") or relating to additional conditions for setting degrees of freedom not set by the coupling condition (25) for the tracking movement of the industrial robot (2).

10. The method according to one of the preceding claims, **characterized in that** the operator is informed via an output means of the movement setting means (3) when the imaging or distance-sensitive sensor (16, 17) can actually detect a reference mark (19, 19', 19") or when such a reference mark (19, 19', 19") is within its detection area, or that the operator is informed via an output means of the movement setting means (3) when the imaging or distance-sensitive sensor (16, 17) has successfully detected one of the reference marks (19, 19', 19").

11. The method according to one of the preceding claims, **characterized in that** the operator is provided via an output means of the movement setting means (3) with at least portions of the properties and information linked by data technology to a detected reference mark (19, 19', 19") or at least portions of the properties and information read from a detected reference mark (19, 19', 19").

12. The method according to one of the preceding claims, **characterized in that** the setting of the coupling condition (25) is performed in the initial step by the operator moving the movement setting means (3) into a desired relative position to the reference mark (19, 19', 19") and by subsequently setting or activating the coupling condition (25) via an input or actuation means on the movement setting means (3).

13. The method according to claim 12, **characterized in that** the relative position, from which the coupling condition (25) is determined, is limited in a technically defined manner, by a defined limited distance between the respective reference mark (19, 19', 19") and the movement setting means (3), or by a direction setting within a specific space segment with reference to the respective reference mark (19, 19', 19") and/or with reference to the movement setting means (3).

14. The method according to claim 13, **characterized in that** the operator is informed by an output means on the movement setting means (3) whether a coupling condition (25) is permissible and/or can be set for the adopted relative position.

15. The method according to one of the preceding claims, **characterized in that** the at least one imaging sensor (16) is formed on the movement setting means (3) by a camera unit (18), by means of which image data is generated from the respectively selected and targeted reference mark (19, 19', 19").

16. The method according to one of the preceding claims, **characterized in that** the at least one distance-sensitive sensor (17) is formed by a short-range distance sensor in the form of an ultrasound sensor, light-reflection sensor, magnetic field sensor or RFID sensor, wherein such a distance-sensitive sensor (17) comprises at least three individual sensors spaced apart from each other, which are provided for the joint detection of a selected reference mark (19, 19', 19").

17. The method according to one of the preceding claims, **characterized in that** the reference marks (19, 19', 19") or at least one of plurally arranged reference marks (19, 19', 19") are formed by a 2D marking in the form of a barcode, a symbol or a graphic.

18. The method according to one of the preceding claims, **characterized in that** the reference marks (19, 19', 19") or at least one of plurally arranged reference marks (19, 19', 19") are formed by a 3D marking in the form of a cuboid, a tetrahedron (20), or in the form of Cartesian pointer axes on the industrial robot (2) to be moved in a controlled manner.

19. The method according to one of the preceding claims, **characterized in that** the movement setting means (3) is designed to be rod-like and has a length (28) of between 10 cm and 100 cm, wherein the at least one imaging sensor (16) or the at least one distance-sensitive sensor (17) is arranged at an end of the movement setting means (3) facing away from a gripping section (36) of the movement setting means (3).

20. The method according to one of the preceding claims, **characterized in that** the movement setting means (3) is designed for the contactless, distance-associated movement coupling relative to the industrial robot (2) or its articulated arms (21, 22, 23), wherein a distance (29) between the movement setting means (3) and the industrial robot (2) or the respective articulated arm (21, 22, 23) has a distance value selected from a range between 20 cm and 200 cm.

21. The method according to one of the preceding claims, **characterized in that** the coupling condition (25) is modeled by computer as a resilient, mechanical connection (26, 27), and/or that for at least one articulated arm (21, 22, 23) bearing a reference mark (19, 19', 19"), the influence of inertia and/or friction is mathematically modelled with reference to the subsequently executed movement.

22. The method according to one of the preceding claims, **characterized in that** the movement setting means (3) comprises at least one contacting and spacing element (33), which contacting and spacing element (33) contacts an articulated arm (21, 22, 23) selected by the operator during the movement of the industrial robot (2) or the selected articulated arm (21, 22, 23) and with a coupling condition (25) adhered to by control technology in the vicinity of its reference mark (19, 19' 19"), or alternatively the selected articulated arm (21, 22, 23) is contacted at a suitable position on its surface, and causes a frictional or positive transmission of force or load-transmitting support between the movement setting means (3) and the at least one articulated arm (21, 22, 23) controlled and moved by the control device (4, 4'), so that the operator is given haptic feedback about the performed robot movement.

23. The method according to one of the preceding claims, **characterized in that** the contacting and spacing element (33) on the movement setting means (3) is formed by at least two, in particular by three or four resilient support elements (41), or by an annular or tubular, resilient support body (43), by means of which support elements (41) or which support body (43) the at least one distance-sensitive or imaging sensor (16, 17) can be moved into different relative positions with respect to the reference marking (19, 19', 19") attached to the respective articulated arm (21, 22, 23) by the operator applying an adjusting force with respect to the movement setting means (3), wherein rotary and/or linear relative displacements of the at least one imaging or distance-sensitive sensor (16, 17) are detected and converted by the control device (4, 4') into corresponding adjusting movements of the respectively mechanically contacted and suitably selected articulated arm (21, 22, 23), or are converted into corresponding adjustment movements by a plurality of the articulated arms (21, 22, 23).

24. A movement setting means (3) for controlling the movements of articulated arms (21, 22, 23) of an industrial robot (2),
wherein the movement setting means (3) is configured to be guided by hand by an operator and for generating at least a part of movement control data for the industrial robot (2) to be controlled,
wherein the movement setting means (3) is configured to be coupled by data technology to at least one stationary control device (4, 4'),
**characterized in that**
the movement setting means (3) comprises at least one imaging and/or at least one distance-sensitive sensor (16, 17), which at least one sensor (16, 17) of the movement setting means (3) can be set with at least one of the plurality of reference marks (19, 19', 19") into a spatial relative position selected by the operator,
and that the movement setting means (3) is configured to perform the method according to one of claims 1 to 23.

25. A control system (1) for controlling the movements of articulated arms (21, 22, 23) of an industrial robot (2),
the control system (1) comprising an industrial robot (2) with articulated arms (21, 22, 23), a stationary control device (4, 4') and a movement setting means (3) according to claim 24,
wherein the movement setting means (3) is coupled by data technology to at least the stationary control device (4, 4'), and the at least one control device (4, 4') is designed at least for the activation and deactivation of movement drives of the industrial robot (2), **characterized in that**
at least one of a plurality of reference marks (19, 19', 19") is arranged or formed at least on individual articulated arms (21, 22, 23) adjustable by the operator in a controlled manner,
and that the control system (1) is configured to perform the method according to one of claims 1 to 23.

## Revendications

1. Procédé de contrôle des mouvements de bras articulés (21, 22, 23) d'un robot industriel (2), avec un moyen de spécification de mouvement (3) à guider manuellement par un opérateur, dont les mouvements sont prévus pour générer au moins une partie de données de contrôle de mouvement pour le robot industriel (2) à contrôler, dans lequel le moyen de spécification de mouvement (3) est couplé par liaison de données avec au moins un dispositif de commande stationnaire (4, 4') et l'au moins un dispositif de commande (4, 4') est conçu au moins pour l'activation et la désactivation d'entraînements de mouvements du robot industriel (2), **caractérisé en ce que**, sur différents bras articulés (21, 22, 23) pouvant être déplacés par l'opérateur, est disposé ou réalisé au moins un parmi plusieurs repères de référence (19, 19', 19") et **en ce que** le moyen de spécification de mouvement (3) comprend au moins un capteur par imagerie et/ou au moins un capteur sensible à distance (16, 17), cet au moins un capteur (16, 17) du moyen de spécification de mouvement (3) pouvant être déplacé, avec au moins un des plusieurs repères de référence (19, 19', 19"), vers une position relative dans l'espace choisie par l'opérateur, dans lequel, dans une étape initiale, grâce à des données d'images et/ou basées sur la distance, à partir de la position relative entre le moyen de spécification de mouvement (3) et le repère de référence (19, 19', 19") respectivement sélectionné, est définie respectivement déterminée une condition de couplage (25) rigide ou une condition de couplage (25) articulée autour de degrés de liberté déterminés, et **en ce que**, dans une étape suivante, pendant un mouvement du moyen de spécification de mouvement (3), au moins le bras articulé (21, 22, 23) portant le repère de référence (19, 19', 19") respectivement sélectionné, les mouvements du moyen de spécification de mouvement (3) sont suivis en termes de commande de façon à ce que, dans le cadre des limites techniques du robot industriel (2) ou de l'au moins un bras articulés (21, 22, 23), la condition de couplage (25) déterminée dans la première étape soit respectée au moins de manière approximative.

2. Procédé selon la revendication 1, **caractérisé en ce que** la poursuite en termes de commande du bras articulé (21, 22, 23) portant le repère de référence (19, 19', 19") respectivement sélectionné a lieu à l'aide de données d'images ou basées sur la distance de l'au moins un capteur d'image ou sensible à la distance (16, 17) et/ou de données provenant d'un ensemble de capteurs (9) intégré dans le moyen de spécification de mouvement (3) et/ou de données d'un ensemble de capteurs (10) externe, en calculant, à partir de ces données, la position ou l'orientation dans l'espace ou les modifications de la position ou de l'orientation dans l'espace du moyen de spécification de mouvement (3).

3. Procédé selon la revendication 1 ou 2, **caractérisé en ce que** la condition de couplage (25) déterminée dans l'étape initiale décrit une liaison rigide (26) entre le moyen de spécification de mouvement (3) et le bras articulé (21, 22, 23) portant le repère de référence (19, 19', 19") sélectionné.

4. Procédé selon la revendication 1 ou 2, **caractérisé en ce que** la condition de couplage (25) déterminée dans l'étape initiale décrit une liaison articulée autour d'un axe (27), dans lequel l'articulation virtuelle présente une position relative constante par rapport au moyen de spécification de mouvement (3) ainsi qu'une position relative constante par rapport au bras articulé (21, 22, 23) portant le repère de référence (19, 19', 19") sélectionné.

5. Procédé selon l'une des revendications précédentes, **caractérisé en ce que**, pour les degrés de liberté du mouvement du robot qui n'ont pas déjà été déterminés par la condition de couplage (25) et le mouvement de spécification de mouvement (3), des conditions secondaires peuvent être déterminées automatiquement ou par une entrée de l'utilisateur.

6. Procédé selon la revendication 5, **caractérisé en ce que**, en tant que condition secondaire, il est déterminé que, pendant la poursuite, l'orientation dans l'espace d'un bras articulé (21, 22, 23) mobile sélectionné par l'intermédiaire des repères de référence (19, 19', 19") est conservée ou **en ce que** la position dans l'espace d'un point associé à un bras articulé (21, 22, 23) mobile est conservée sans changement ou **en ce que** aussi bien la position que l'orientation d'un bras articulé (21, 22, 23) mobile est maintenue constante.

7. Procédé selon l'une des revendications précédentes, **caractérisé en ce que** la poursuite d'un bras articulé (21, 22, 23) mobile sélectionné n'a lieu que pendant ou après une instruction de déverrouillage par l'opérateur, plus particulièrement uniquement pendant l'actionnement d'un palpeur d'instruction de couplage de mouvement ou d'un dispositif de commutation de sécurité (6) sous la forme d'une touche de déverrouillage ou de validation.

8. Procédé selon l'une des revendications précédentes, **caractérisé en ce qu'**une pluralité de repères de référence (19, 19', 19") codés respectivement de manière distincte sont prévus à différentes positions sur un bras articulé (21, 22, 23) mobile ou sur plusieurs bras articulés (21, 22, 23) mobiles, **en ce que** le capteur d'image ou sensible à la distance (16, 17) peut détecter le codage ou la caractéristique d'un tel repère de référence (19, 19', 19") et **en ce qu'**un repère de référence (19, 19', 19") sélectionné par l'opérateur et détecté ou lu avec le moyen de spécification de mouvement (3) est utilisé ou contribue à la détermination de la condition de couplage (25), grâce au fait que l'opérateur positionne le moyen de spécification de mouvement (3) de façon à ce que le repère de référence (19, 19', 19") respectif se trouve dans la zone de détection du capteur d'image ou sensible à la distance (16, 17) et à ce que le capteur d'image ou sensible à la distance (16, 17) détecte, sous la forme d'un signal, le codage ou la caractéristique du repère de référence (19, 19', 19") souhaité ou sélectionné de manière correspondante.

9. Procédé selon la revendication 8, **caractérisé en ce que**, avec le codage d'un repère de référence (19, 19', 19"), sont associées des propriétés et des informations sous la forme de données ou **en ce que** le codage respectif contient les données correspondantes, plus particulièrement concernant une position de fixation du repère de référence (19, 19', 19") respectif sur le robot industriel ou par rapport à son bras articulé (21, 22, 23) ou concernant la position sur une pièce maintenue par le robot industriel (2), ou concernant un nom descriptif du repère de référence (19, 19', 19") respectif ou concernant un identifiant ou une désignation du bras articulé (21, 22, 23) respectif portante le repère de référence (19, 19', 19") ou concernant des conditions supplémentaires pour la détermination de degrés de liberté non déterminés par la condition de couplage (25) pour le mouvement de poursuite du robot industriel (2).

10. Procédé selon l'une des revendications précédentes, **caractérisé en ce qu'**il est signalé à l'opérateur, par l'intermédiaire d'un moyen de sortie du moyen de spécification de mouvement (3), lorsque le capteur d'image ou sensible à la distance (16, 17) peut détecter effectivement un repère de référence (19, 19', 19") ou lorsqu'un tel repère de référence (19, 19', 19") se trouve dans sa zone de détection, ou **en ce qu'**il est signalé à l'opérateur, par l'intermédiaire d'un moyen de sortie du moyen de spécification de mouvement (3), lorsque le capteur d'image ou sensible à la distance (16, 17) a détecté avec succès un des repères de référence (19, 19', 19").

11. Procédé selon l'une des revendications précédentes, **caractérisé en ce que** sont affichées, à l'attention de l'opérateur, par l'intermédiaire d'un moyen de sortie du moyen de spécification de mouvement (3), au moins des parties des propriétés et informations associées sous forme de données avec un repère de référence (19, 19', 19") détecté ou au moins des parties des propriétés et informations lues en provenance d'un repère de référence (19, 19', 19") détecté.

12. Procédé selon l'une des revendications précédentes, **caractérisé en ce que** la détermination de la condition de couplage (25) dans l'étape initiale a lieu par le déplacement du moyen de spécification de mouvement (3) par un opérateur vers une position relative, souhaitée par celui-ci, par rapport au repère de référence (19, 19', 19") et par une détermination ou une activation suivante de la condition de couplage (25) par l'intermédiaire d'un moyen d'entrée ou d'actionnement sur le moyen de spécification de mouvement (3).

13. Procédé selon la revendication 12, **caractérisé en ce que** la position relative, à partir de laquelle la condition de couplage (25) est déterminée est limitée de manière définie techniquement par une distance limitée de manière définie entre le repère de référence (19, 19', 19") respectif et le moyen de spécification de mouvement (3) ou est définie par une spécification de direction à l'intérieur d'un segment spatial déterminé par rapport au repère de référence (19, 19', 19") respectif et/ou par rapport au moyen de spécification de mouvement (3).

14. Procédé selon la revendication 13, **caractérisé en ce qu'**il est signalé à l'opérateur, par l'intermédiaire d'un moyen de sortie sur le moyen de spécification de mouvement (3), si, pour la position relative adoptée, une condition de couplage (25) est admissible respectivement peut être déterminée.

15. Procédé selon l'une des revendications précédentes, **caractérisé en ce que** l'au moins un capteur d'image (16) sur le moyen de spécification de mouvement (3) est constitué d'une unité de caméra (18) avec laquelle sont générées des données d'image provenant du repère de référence (19, 19', 19") respectivement sélectionné et visé.

16. Procédé selon l'une des revendications précédentes, **caractérisé en ce que** l'au moins un capteur sensible à la distance (17) est constitué d'un capteur de distance à courte portée sous la forme d'un capteur à ultrasons, d'un capteur à réflexion de lumière, d'un capteur de champ magnétique ou d'un capteur RFID, dans lequel un tel capteur sensible à la distance (17) comprend au moins trois capteurs individuels distants entre eux qui sont conçus pour la détection commune d'un repère de référence (19, 19', 19") sélectionné.

17. Procédé selon l'une des revendications précédentes, **caractérisé en ce que** les repères de référence (19, 19', 19") ou au moins un parmi plusieurs repères de référence (19, 19', 19") sont constitués d'un marquage 2D sous la forme d'un cade barre, d'un symbole ou d'un graphisme.

18. Procédé selon l'une des revendications précédentes, **caractérisé en ce que** les repères de référence (19, 19', 19") ou au moins un parmi plusieurs repères de référence (19, 19', 19") sont constitués d'un marquage 3D sous la forme d'un parallélépipède, d'un tétraèdre (20) ou sous la forme d'axes d'aiguilles cartésiens sur le robot industriel (2) à déplacer de manière contrôlée.

19. Procédé selon l'une des revendications précédentes, **caractérisé en ce que** le moyen de spécification de mouvement (3) présente la forme d'une barre et présente une longueur (28) entre 10 cm et 100 cm, dans lequel l'au moins un capteur d'image (16) ou l'au moins un capteur sensible à la distance (17) est disposé sur une extrémité du moyen de spécification de mouvement (3) opposée à une portion de préhension (36) du moyen de spécification de mouvement (3).

20. Procédé selon l'une des revendications précédentes, **caractérisé en ce que** le moyen de spécification de mouvement (3) est conçu pour le couplage de mouvement sans contact, lié à la distance, par rapport au robot industriel (2) ou ses gras articulés (21, 22, 23), dans lequel une distance (29) entre le moyen de spécification de mouvement (3) et le robot industriel (2) ou le bras articulé (21, 22, 23) respectif présente une valeur de distance sélectionnée dans un intervalle entre 20 cm et 200 cm.

21. Procédé selon l'une des revendications précédentes, **caractérisé en ce que** la condition de couplage (25) est modélisée par calcul sous la forme d'une liaison mécanique élastiquement flexible (26, 27) et/ou **en ce que**, pour au moins un bras articulé (21, 22, 23) portant un repère de référence (19, 19', 19"), l'influence d'une inertie de masse et/ou d'une force de friction sur le mouvement effectué ensuite est modélisée par calcul.

22. Procédé selon l'une des revendications précédentes, **caractérisé en ce que** le moyen de spécification de mouvement (3) comprend au moins un élément de mise en contact et d'écartement (33), cet élément de mise en contact et d'écartement (33) entrant en contact avec un bras articulé (21, 22, 23) sélectionné par l'opérateur pendant le mouvement du robot industriel (2) ou du bras articulé (21, 22, 23) articulé et, lorsque la condition de couplage (25), est respectée d'un point de vue de la commande, à proximité de son repère de référence (19, 19', 19"), ou en variante, entrant en contact avec le bras articulé (21, 22, 23) sélectionné à une position appropriée sur sa surface et permet ainsi une transmission de forces par friction ou par complémentarité de forme ou un appui transmettant les charges entre le moyen de spécification de mouvement (3) et l'au moins un bras articulé (21, 22, 23) contrôlé et déplacé par le dispositif de commande (4, 4'), de façon à ce qu'à l'opérateur soit transmis un retour haptique correspondant au mouvement exécuté par le robot.

23. Procédé selon l'une des revendications précédentes, **caractérisé en ce que** l'élément de mise en contact et d'écartement (33) sur le moyen de spécification de mouvement (3) est constitué d'au moins deux, plus particulièrement trois ou quatre, éléments d'appui flexibles (41) ou d'un corps d'appui élastiquement flexible (43), de forme annulaire ou tubulaire, ces éléments d'appui (41) ou ce corps d'appui (43) permettant de déplacer l'au moins un capteur d'image ou sensible à la distance (16, 17), par l'application d'une force de déplacement de la part de l'opérateur, par rapport au moyen de spécification de mouvement (3), vers différentes positions relatives par rapport au repère de référence (19, 19', 19") fixé sur le bras articulé (21, 22, 23) respectif, dans lequel des déplacements relatifs rotatifs et/ou linéaires sont détectés par l'au moins un capteur d'image ou sensible à la distance (16, 17) et sont convertis, par le dispositif de commande (4, 4') dans des mouvements correspondants du bras articulé (21, 22, 23) respectivement mis en contact mécanique et sélectionné de manière correspondante, ou convertis dans des mouvements correspondants par plusieurs des bras articulés (21, 22, 23).

24. Moyen de spécification de mouvement (3) pour le contrôle des mouvements de bras articulés (21, 22, 23) d'un robot industriel (2),
dans lequel le moyen de spécification de mouvement (3) est conçu pour le guidage manuel par un opérateur et pour la génération d'au moins une partie de données de contrôle de mouvement pour le robot industriel (2),
dans lequel le moyen de spécification de mouvement (3) est conçu pour être couplé par une liaison de données avec au moins un dispositif de commande stationnaire (4, 4'), **caractérisé en ce que**
le moyen de spécification de mouvement (3) comprend au moins un capteur d'image et/ou au moins un capteur sensible à la distance (16, 17), cet au moins un capteur (16, 17) du moyen de spécification de mouvement (3) pouvant être déplacé avec au moins un des plusieurs repères de référence (19, 19', 19") vers une position relative dans l'espace sélectionnée par l'opérateur,
et **en ce que** le moyen de spécification de mouvement (3) est conçu pour l'exécution du procédé selon l'une des revendications 1 à 23.

25. Système de commande (1) pour le contrôle des mouvements de bras articulés (21, 22, 23) d'un robot industriel (2), ce système de commande (1) comprenant un robot industriel (2) avec des bras articulés (21, 22, 23), un dispositif de commande stationnaire (4, 4') et un moyen de spécification de mouvement (3) selon la revendication 24,
dans lequel le moyen de spécification de mouvement (3) est couplé par une liaison de données avec au moins le dispositif de commande stationnaire (4, 4') et l'au moins un dispositif de commande (4, 4') est conçu au moins pour l'activation et la désactivation d'entraînements de mouvements du robot industriel (2),
**caractérisé en ce que**
au moins sur différents bras articulés (21, 22, 23) pouvant être déplacés de manière contrôlée par l'opérateur, est disposé ou réalisé au moins un parmi plusieurs repères de référence (19, 19', 19"),
et **en ce que** le système de commande (1) est conçu pour l'exécution du procédé selon l'une des revendications 1 à 23.
